# EUROPEAN PATENT APPLICATION

(11) **EP 4 797 656 A1**
(43) Date of publication of application: **26.08.2026**
(21) Application number: 26157476.8
(22) Date of filing: 10.02.2026
(51) Int. Cl.: H04L 65/1016, H04W 4/90

(54) **IMS PLATFORM FOR EMERGENCY NOTIFICATION SERVICES**

(30) Priority: 21.02.2025 US 202519059969
(71) Applicant: Nokia Solutions and Networks Oy, 02610 Espoo (FI)
(72) Inventor: DION, Gino, Kingston, NB (CA)
(74) Representative: Nokia EPO representatives

(57) **Abstract**

Various example embodiments of an emergency notification capability are presented. The emergency notification capability may be configured to support use of an Internet Protocol (IP) Multimedia Subsystem (IMS) platform to provide emergency notification services for a predefined user group including a first user who initiates an emergency call and other users which receive corresponding emergency notifications based on the emergency call. The delivery of emergency notifications to the other users of the predefined user group may include delivery of emergency notifications to one or more other users directly via the IMS platform (e.g., within the IMS platform and/or based on interfacing between the IMS platform and other notification platforms) and/or delivery of emergency notifications to one or more other users indirectly via a customer premises gateway device of the first user who initiates the emergency call (e.g., the customer premises gateway device receives and initiates delivery of the emergency notifications).

## Description

### TECHNICAL FIELD

Various example embodiments relate generally to communication networks and, more particularly but not exclusively, to providing emergency notification services via communication networks.

### BACKGROUND

Various communications technologies may be used to support communications in various types of communications systems.

### SUMMARY

In at least some example embodiments, an apparatus includes at least one processor and at least one memory storing instructions which, when executed by the at least one processor, cause the apparatus at least to perform detecting, by an Internet Protocol (IP) Multimedia Subsystem (IMS) device, an emergency call associated with a predefined user group including a first user and a set of other users, wherein the emergency call is initiated by the first user of the predefined user group, obtaining, by the IMS device based on the emergency call, user group information for the predefined user group, wherein the user group information includes indications of respective user devices of the other users of the predefined user group and indications of respective notification preferences of the other users of the predefined user group, generating, by the IMS device based on at least a portion of the user group information, a set of emergency notifications for the other users of the predefined user group, and sending, by the IMS device, the set of emergency notifications for the other users of the predefined user group.

In at least some example embodiments, a computer-readable medium stores computer program code which, when executed by an apparatus, causes the apparatus at least to perform detecting, by an Internet Protocol (IP) Multimedia Subsystem (IMS) device, an emergency call associated with a predefined user group including a first user and a set of other users, wherein the emergency call is initiated by the first user of the predefined user group, obtaining, by the IMS device based on the emergency call, user group information for the predefined user group, wherein the user group information includes indications of respective user devices of the other users of the predefined user group and indications of respective notification preferences of the other users of the predefined user group, generating, by the IMS device based on at least a portion of the user group information, a set of emergency notifications for the other users of the predefined user group, and sending, by the IMS device, the set of emergency notifications for the other users of the predefined user group.

In at least some example embodiments, a method includes detecting, by an Internet Protocol (IP) Multimedia Subsystem (IMS) device, an emergency call associated with a predefined user group including a first user and a set of other users, wherein the emergency call is initiated by the first user of the predefined user group, obtaining, by the IMS device based on the emergency call, user group information for the predefined user group, wherein the user group information includes indications of respective user devices of the other users of the predefined user group and indications of respective notification preferences of the other users of the predefined user group, generating, by the IMS device based on at least a portion of the user group information, a set of emergency notifications for the other users of the predefined user group, and sending, by the IMS device, the set of emergency notifications for the other users of the predefined user group.

In at least some example embodiments, an apparatus includes means for detecting, by an Internet Protocol (IP) Multimedia Subsystem (IMS) device, an emergency call associated with a predefined user group including a first user and a set of other users, wherein the emergency call is initiated by the first user of the predefined user group, means for obtaining, by the IMS device based on the emergency call, user group information for the predefined user group, wherein the user group information includes indications of respective user devices of the other users of the predefined user group and indications of respective notification preferences of the other users of the predefined user group, means for generating, by the IMS device based on at least a portion of the user group information, a set of emergency notifications for the other users of the predefined user group, and means for sending, by the IMS device, the set of emergency notifications for the other users of the predefined user group.

In at least some example embodiments, obtaining the user group information for the predefined user group includes determining, based on the emergency call, an identity of the first user of the predefined user group, determining, based on the identity of the first user of the predefined user group, an identity of the predefined user group, and initiating, based on the identity of the predefined user group, a request for the user group information for the predefined user group. In at least some example embodiments, the means for obtaining the user group information for the predefined user group includes means for determining, based on the emergency call, an identity of the first user of the predefined user group, means for determining, based on the identity of the first user of the predefined user group, an identity of the predefined user group, and means for initiating, based on the identity of the predefined user group, a request for the user group information for the predefined user group. In at least some example embodiments, the user group information is obtained based on at least one of an Extensible Markup Language (XML) Configuration Access Protocol (XCAP) request or a DIAMETER protocol request.

In at least some example embodiments, generating the set of emergency notifications for the other users of the predefined user group includes determining, for each of the other users of the predefined user group based on the user group information, emergency notification generation information for the respective emergency notification to be provided to the respective other user of the predefined user group, and generating, for each of the other users of the predefined user group based on the respective emergency notification generation information for the respective other users of the predefined user group, the respective emergency notification for the respective other user of the predefined user group. In at least some example embodiments, the means for generating the set of emergency notifications for the other users of the predefined user group includes means for determining, for each of the other users of the predefined user group based on the user group information, emergency notification generation information for the respective emergency notification to be provided to the respective other user of the predefined user group, and means for generating, for each of the other users of the predefined user group based on the respective emergency notification generation information for the respective other users of the predefined user group, the respective emergency notification for the respective other user of the predefined user group. In at least some example embodiments, for at least one of the other users of the predefined user group, the emergency notification generation information specifies at least one of: a device on which the respective emergency notification is to be presented to the respective other user of the predefined user group, a format in which the respective emergency notification is to be presented to the respective other user of the predefined user group, or a type of emergency information to be included as part of the respective emergency notification to be presented to the respective other user of the predefined user group.

In at least some example embodiments, sending the set of emergency notifications for the other users of the predefined user group includes sending, by the IMS device toward a user device of one of the other users using SIP signaling, one of the emergency notifications. In at least some example embodiments, the means for sending the set of emergency notifications for the other users of the predefined user group includes means for sending, by the IMS device toward a user device of one of the other users using SIP signaling, one of the emergency notifications. In at least some example embodiments, the one of the emergency notifications is sent toward the user device of the one of the other users using SIP signaling based on a determination, based on the user group information, that the one of the other users has a respective preference to be notified via the user device. In at least some example embodiments, the one of the emergency notifications is sent toward the user device of the one of the other users using SIP signaling based on a determination that the first user and the one of the other users are associated with a common telecommunications service provider.

In at least some example embodiments, sending the set of emergency notifications for the other users of the predefined user group includes sending, by the IMS device toward a customer premises gateway device of the first user, at least one of the emergency notifications. In at least some example embodiments, the means for sending the set of emergency notifications for the other users of the predefined user group includes means for sending, by the IMS device toward a customer premises gateway device of the first user, at least one of the emergency notifications. In at least some example embodiments, the at least one of the emergency notifications is sent toward the customer premises gateway device of the first user based on a determination, based on the user group information, that at least one of the other users has a respective preference to be notified via a user device not associated with an IMS system supporting communications of the first user. In at least some example embodiments, the at least one of the emergency notifications is sent toward the customer premises gateway device of the first user based on a determination, based on the user group information, that at least one of the other users has a respective preference to be notified via a messaging platform.

In at least some example embodiments, sending the set of emergency notifications includes at least one of sending, using a SIP MESSAGE method, one or more text-based emergency notifications or sending, using a SIP NOTIFY method, one or more emergency status update notifications. In at least some example embodiments, the means for sending the set of emergency notifications includes at least one of means for sending, using a SIP MESSAGE method, one or more text-based emergency notifications or means for sending, using a SIP NOTIFY method, one or more emergency status update notifications. In at least some example embodiments, sending the set of emergency notifications includes at least one of sending at least one of the emergency notifications through a social media platform based on an interface between an IMS network of the IMS device and the social media platform or sending at least one of the emergency notifications through a public emergency alert system based on an interface between an IMS network of the IMS device and the public emergency alert system. In at least some example embodiments, the means for sending the set of emergency notifications includes at least one of means for sending at least one of the emergency notifications through a social media platform based on an interface between an IMS network of the IMS device and the social media platform or means for sending at least one of the emergency notifications through a public emergency alert system based on an interface between an IMS network of the IMS device and the public emergency alert system.

In at least some example embodiments, the set of emergency notifications includes at least one of a text notification, an audio notification, a video notification, a multimedia notification, or a haptic notification. In at least some example embodiments, the set of emergency notifications includes at least one of a simple message service (SMS) message, a voice call, a voice message, an electronic mail message, a mobile application notification, or a smart device notification. In at least some example embodiments, the set of emergency notifications includes at least one of a notification to be presented via a television, a notification to be presented via a wearable device, a notification to be presented via a heads-up display, a notification to be presented via an augmented reality system, a notification to be presented via a virtual reality system, a notification to be presented via a smart home device, or a notification to be presented via a car infotainment system.

In at least some example embodiments, the set of emergency notifications includes at least one notification including one or more of an indication of an identity of the first user, an indication of a location of the first user, or an indication of an emergency type for which the first user initiated the emergency call. In at least some example embodiments, the set of emergency notifications includes at least one notification sent using at least one IMS signaling protocol. In at least some example embodiments, the set of emergency notifications includes at least one multimedia message sent based on Rich Communication Services (RCS). In at least some example embodiments, the set of emergency notifications includes at least one notification generated based on a proximity of one of the other users to a location of the first user who initiated the emergency call. In at least some example embodiments, at least one of the emergency notifications is encrypted.

In at least some example embodiments of the apparatus, the instructions, when executed by the at least one processor, cause the apparatus to further perform initiating, by the IMS device based on the user group information, a group call among at least some of the other users of the predefined user group. In at least some example embodiments of the computer-readable medium, the computer program code, when executed by the apparatus, causes the apparatus to further perform initiating, by the IMS device based on the user group information, a group call among at least some of the other users of the predefined user group. In at least some example embodiments of the method, the method further includes initiating, by the IMS device based on the user group information, a group call among at least some of the other users of the predefined user group. In at least some example embodiments of the apparatus, the apparatus further includes means for initiating, by the IMS device based on the user group information, a group call among at least some of the other users of the predefined user group.

In at least some example embodiments of the apparatus, the instructions, when executed by the at least one processor, cause the apparatus to further perform receiving, by the IMS device from one of the other users of the predefined user group, feedback information, and sending, by the IMS device toward at least one emergency service, at least a portion of the feedback information. In at least some example embodiments of the computer-readable medium, the computer program code, when executed by the apparatus, causes the apparatus to further perform receiving, by the IMS device from one of the other users of the predefined user group, feedback information, and sending, by the IMS device toward at least one emergency service, at least a portion of the feedback information. In at least some example embodiments of the method, the method further includes receiving, by the IMS device from one of the other users of the predefined user group, feedback information, and sending, by the IMS device toward at least one emergency service, at least a portion of the feedback information. In at least some example embodiments of the apparatus, the apparatus further includes means for receiving, by the IMS device from one of the other users of the predefined user group, feedback information, and means for sending, by the IMS device toward at least one emergency service, at least a portion of the feedback information.

In at least some example embodiments, an apparatus includes at least one processor and at least one memory storing instructions which, when executed by the at least one processor, cause the apparatus at least to perform registering, by a customer premises gateway device with an Internet Protocol (IP) Multimedia Subsystem (IMS) device, for an emergency notification service for a predefined user group including a user of the customer premises gateway device and a set of other users, receiving, by the customer premises gateway device from the IMS device based on the emergency notification service and based on initiation of an emergency call by the user of the predefined user group, a set of emergency notifications intended for delivery to the set of other users of the predefined user group, and sending, by the customer premises gateway device toward the set of other users of the predefined user group, the set of emergency notifications.

In at least some example embodiments, a computer-readable medium stores computer program code which, when executed by an apparatus, causes the apparatus at least to perform registering, by a customer premises gateway device with an Internet Protocol (IP) Multimedia Subsystem (IMS) device, for an emergency notification service for a predefined user group including a user of the customer premises gateway device and a set of other users, receiving, by the customer premises gateway device from the IMS device based on the emergency notification service and based on initiation of an emergency call by the user of the predefined user group, a set of emergency notifications intended for delivery to the set of other users of the predefined user group, and sending, by the customer premises gateway device toward the set of other users of the predefined user group, the set of emergency notifications.

In at least some example embodiments, a method includes registering, by a customer premises gateway device with an Internet Protocol (IP) Multimedia Subsystem (IMS) device, for an emergency notification service for a predefined user group including a user of the customer premises gateway device and a set of other users, receiving, by the customer premises gateway device from the IMS device based on the emergency notification service and based on initiation of an emergency call by the user of the predefined user group, a set of emergency notifications intended for delivery to the set of other users of the predefined user group, and sending, by the customer premises gateway device toward the set of other users of the predefined user group, the set of emergency notifications.

In at least some example embodiments, an apparatus includes means for registering, by a customer premises gateway device with an Internet Protocol (IP) Multimedia Subsystem (IMS) device, for an emergency notification service for a predefined user group including a user of the customer premises gateway device and a set of other users, means for receiving, by the customer premises gateway device from the IMS device based on the emergency notification service and based on initiation of an emergency call by the user of the predefined user group, a set of emergency notifications intended for delivery to the set of other users of the predefined user group, and means for sending, by the customer premises gateway device toward the set of other users of the predefined user group, the set of emergency notifications.

### BRIEF DESCRIPTION OF THE DRAWINGS

The teachings herein can be readily understood by considering the following detailed description in conjunction with the accompanying drawings, in which:
FIG. 1 depicts an example embodiment of a system including an Internet Protocol (IP) Multimedia Subsystem (IMS) platform configured to support emergency notification services for a predefined user group;
FIG. 2 depicts an example embodiment of a system including an IMS platform configured to support emergency notification services for a predefined user group;
FIG. 3 depicts an example embodiment of a signaling flow configured to support emergency notification services for a predefined user group;
FIG. 4 depicts an example embodiment of a method for use by an IMS device to support emergency notification services for a predefined user group;
FIG. 5 depicts an example embodiment of a method for use by a customer premises gateway device to support emergency notification services for a predefined user group; and
FIG. 6 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

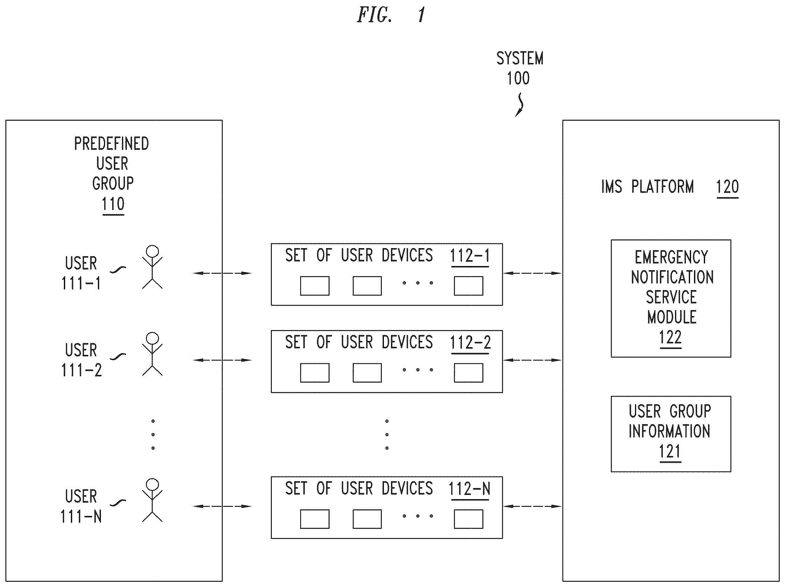

Various example embodiments of an emergency notification capability are presented herein. The emergency notification capability may be configured to support use of an Internet Protocol (IP) Multimedia Subsystem (IMS) platform to provide emergency notification services for a predefined user group. The emergency notification capability may be configured to support use of an IMS platform to support delivery of emergency notifications to a predefined user group, where the predefined user group includes a first user who initiates an emergency call and one or more other users which receive corresponding emergency notifications based on initiation of the emergency call by the first user. The delivery of emergency notifications to the other users of the predefined user group may include delivery of emergency notifications to one or more of the other users directly via the IMS platform (e.g., within the IMS platform and/or based on interfacing between the IMS platform and other notification platforms) and/or delivery of emergency notifications to one or more of the other users indirectly via a customer premises gateway device of the first user who initiates the emergency call (e.g., the customer premises gateway device receives the emergency notifications and initiates delivery of the emergency notifications, such as via various messaging systems, messaging platforms, or the like, as well as various combinations thereof). The emergency notification capability may be configured to support use of an IMS device to support delivery of emergency notifications to a set of users of a predefined user group by detecting, by the IMS device, an emergency call associated with a predefined user group including a first user and a set of other users, wherein the emergency call is initiated by the first user of the predefined user group, obtaining, by the IMS device based on the emergency call, user group information for the predefined user group, wherein the user group information includes indications of respective user devices of the other users of the predefined user group and indications of respective notification preferences of the other users of the predefined user group, generating, by the IMS device based on at least a portion of the user group information, a set of emergency notifications for the other users of the predefined user group, and sending, by the IMS device, the set of emergency notifications for the other users of the predefined user group. The emergency notification capability may be configured to support use of a customer premises gateway device to support delivery of emergency notifications to a set of users of a predefined user group by registering, by the customer premises gateway device with an IMS device, for an emergency notification service for a predefined user group including a user of the customer premises gateway device and a set of other users, receiving, by the customer premises gateway device from the IMS device based on the emergency notification service and based on initiation of an emergency call by the user of the predefined user group, a set of emergency notifications intended for delivery to the set of other users of the predefined user group, and sending, by the customer premises gateway device toward the set of other users of the predefined user group, the set of emergency notifications. The emergency notifications may be provided in various ways (e.g., via various notification platforms and channels, using various messaging platforms and protocols, or the like, as well as various combinations thereof), may be provided in various formats (e.g., using text-based notifications, image-based notifications, audio-based notifications, video-based notifications, multimedia-based notifications, haptic-based notifications, augmented reality (AR)-based notifications, virtual reality (VR)-based notifications, projection-based notifications, light-based notifications, scent-based notifications, or the like, as well as various combinations thereof), may include various types of emergency information (e.g., identity of the emergency caller, personal information of the emergency caller, location of the emergency caller, type of emergency being experienced, detailed emergency information, an indication as to emergency services personnel that have or will be dispatched for the emergency, or the like, as well as various combinations thereof), or the like, as well as various combinations thereof. It will be appreciated that these example embodiments of the emergency notification capability, as well as various other example embodiments of the emergency notification capability, may be further understood by way of reference to FIG. 1.

FIG. 1 depicts an example embodiment of a system including an Internet Protocol (IP) Multimedia Subsystem (IMS) platform configured to support an emergency notification service for a predefined user group.

The system 100 includes a predefined user group 110 configured to utilize an emergency notification service and an IMS platform 120 configured to support the emergency notification service for the predefined user group 110. The emergency notification service is configured to support delivery of emergency notifications to members of the predefined user group 110 via the IMS platform 120 when any member of the predefined user group 110 places an emergency call via the IMS platform 120. The emergency notification service may be based on maintenance of user group information for the predefined user group 110, detection of emergency calls initiated by members of the predefined user group 110, generation of emergency notifications for some or all of the other members of the predefined user group 110 based on detection of emergency calls initiated by members of the predefined user group 110 and using the user group information for the predefined user group 110 (e.g., identification of the member which initiated the emergency call, identification of members to be notified based on the emergency call, identification of emergency notification preferences for the members to be notified based on the emergency call, or the like, as well as various combinations thereof), and delivery of the generated emergency notifications to the members of the predefined user group 110. The emergency notification service for the predefined user group 110 may be supported by the IMS platform 120 based on the configuration of the IMS platform 120 to support various capabilities as discussed further below.

The predefined user group 110 includes a set of users 111-1 to 111-N (collectively, users 111) having sets of user devices 112-1 to 112-N (collectively, sets of user devices 112) associated therewith, respectively. The set of users 111 of the predefined user group 110 may include any set of individuals who need or want to be associated together as a group for purposes of receiving emergency notifications when any of the users 111 of the predefined user group 110 initiates an emergency call in response to an emergency. The set of user devices 112 of a user 111 of the predefined user group 110 may include one or more devices of the user 111 of the predefined user group 110. The set of user devices 112 of a user 111 of the predefined user group 110 may include any devices which may be used by the user 111 within the context of the emergency notification service, including for initiation of emergency calls by the user 111 and receipt and presentation of emergency notifications to the user 111. The predefined user group 110, including the users 111 of the predefined user group 110 and the sets of user devices 112 of the users 111 of the predefined user group 110 which are associated with the user 111 within the context of the predefined user group 110, may be managed and utilized in various ways for supporting the emergency notification service for the predefined user group 110.

The set of users 111 of the predefined user group 110, as noted above, may include any set of individuals who need or want to be associated together as a group for purposes of receiving emergency notifications when any of the users 111 of the predefined user group 110 initiates an emergency call in response to an emergency. For example, the set of users 111 of the predefined user group 110 may include a group of family members of a family, a group of friends, a group of neighbors, a group of family members and one or more trusted neighbors of one or more of the family members of the family, a group of family members and one or more trusted friends of one or more of the family members, a group of co-workers, a group of family members of a family and one or more medical care providers of one or more of the family members, or the like, as well as various combinations thereof. It will be appreciated that one or more of the users 111 of the predefined user group 110 may be bots (e.g., a chatbot, a personal assistant bot, or the like). It will be appreciated that the users 111 of the predefined user group 110 also may be referred to herein as group members or members of the group or, more generally, members.

The set of user devices 112 of a user 111 of the predefined user group 110, as noted above, may include any devices which may be used by the user 111 within the context of the emergency notification service and, thus, may include one or more emergency calling devices via which the user 111 may initiate an emergency call and one or more emergency notification devices via which the user 111 may receive emergency notifications. The emergency calling devices of a user 111 may include any devices via which the user 111 may initiate an emergency call. For example, the one or more emergency calling devices of a user 111 may include landline telephones, wireless telephones, or the like. The one or more emergency notification devices may include any devices via which a user 111 of the predefined user group 110 may receive an emergency notification based on detection of emergency call from any of the other users 111 of the predefined user group 110. For example, the one or more emergency notification devices of a user 111 may include phones (e.g., landline phones, mobile phones, smartphones, or the like), computers (e.g., desktops, laptops, tablets, or the like), wearable devices (e.g., smartwatches, fitness trackers, or the like), heads-up displays of AR/VR systems, smart home devices (e.g., smart home control devices, smart lighting, or the like), or the like, as well as various combinations thereof. It will be appreciated that, for each of the users 111, one or more of the user devices 112 of the user 111 may be configured to be used as both an emergency calling device and an emergency notification device (e.g., a wireline phone, a smartphone, or the like).

The IMS platform 120 may include an IMS system that has been configured to support emergency notification services for the predefined user group 110. For example, the IMS platform 120 may include an IMS system having various IMS elements (e.g., Call Session Control Functions (CSCFs), Home Subscriber Servers (HSSs), Media Resource Functions (MRFs), Breakout Gateway Control Functions (BGCFs), Interconnect Border Control Functions (IBCFs), Media Gateway Control Functions (MGCFs), Media Gateways (MGWs), Application Level Gateways (ALGs), Transition Gateways (TrGWs), Location Retrieval Functions (LRFs), or the like, as well as various combinations thereof) supporting various IMS protocols and capabilities (e.g., SIP signaling, the SIP MESSAGE method, the XML Configuration Access Protocol (XCAP), the Presence and Event Package, the SIP Subscribe/Notify process, the SIP MESSAGE for Multimedia Services, SMS over IMS, the DIAMETER Protocol (for Subscriber Data Management), Rich Communication Services (RCS), PUSH Over IMS, or the like, as well as various combinations thereof). The IMS platform 120 may be configured such that the various IMS elements, protocols, and capabilities may be adapted to support emergency notification services so as to support emergency notification services for the predefined user group 110.

The IMS platform 120 may be configured to use the IMS system to support emergency notification services for the predefined user group 110. The IMS platform 120 may be configured to use the IMS system to support emergency notification services for the predefined user group 110 by maintaining user group information 121 for the predefined user group 110 (including, for example, supporting creation and management of the user group information 121 for the predefined user group 110) and by using an emergency notification service module 122 to support delivery of emergency notifications to users 111 of the predefined user group 110, based on the user group information 121 for the predefined user group 110, when users 111 of the predefined user group 110 initiate emergency calls. The user group information 121 for the predefined user group 110 may include various types of information which may be used to support delivery of emergency notifications to users 111 of the predefined user group 110. The emergency notification service module 122 may be configured to support delivery of emergency notifications to users 111 of the predefined user group 110 by detecting emergency calls initiated by users 111 of the predefined user group 110, generating emergency notifications for users 111 of the predefined user group 110 based on the user group information 121 for the predefined user group 110 when emergency calls initiated by users 111 of the predefined user group 110 are detected (including, for example, determining the identity of a user 111 who initiates an emergency call, identifying the predefined user group 110 based on the identity of the user 111 who initiates the emergency call, identifying other users 111 of the predefined user group 110 to be notified with emergency notifications based on the emergency call, generating the emergency notifications for the other users 111 of the predefined user group 110 to be notified with emergency notifications based on the user group information 121 for the predefined user group 110, and so forth), and supporting delivery of the emergency notifications for the other users 111 of the predefined user group 110 to be notified with emergency notifications based on the emergency call, or the like, as well as various combinations thereof. It will be appreciated that the IMS platform 120 may be configured to support various other functions and capabilities for supporting emergency notification services for the predefined user group 110.

The IMS platform 120 may be configured to use the IMS system to support emergency notification services for the predefined user group 110 by maintaining user group information 121 for the predefined user group 110. The IMS platform 120 may support maintenance of user group information 121 for the predefined user group 110 by supporting creation of the user group information 121 for the predefined user group 110, management of the user group information 121 for the predefined user group 110, or the like, as well as various combinations thereof. The IMS platform 120 may support maintenance of user group information 121 for the predefined user group 110 based on use of various group management capabilities which also may support creation and management of the user group information 121 for the predefined user group 110 (e.g., applications, websites, or the like, as well as various combinations thereof). For example, one or more of the users 111 of the predefined user group 110 may utilize one or more applications or websites in order to establish the predefined user group 110, enter information defining various aspects of the predefined user group 110, update information for the predefined user group 110, and so forth, which information may then be maintained by the IMS platform 120 as the user group information 121 for the predefined user group 110 for use in supporting emergency notification services for the predefined user group 110.

The IMS platform 120 may support maintenance of user group information 121 for the predefined user group 110 based on use of various information management capabilities. The IMS platform 120 may support maintenance of user group information 121 for the predefined user group 110 based on use of various information storage capabilities (e.g., maintaining user group information 121 for the predefined user group 110 using one or more databases, one or more database access protocols or capabilities, or the like, as well as various combinations thereof). The IMS platform 120 may support maintenance of user group information 121 for the predefined user group 110 based on use of various information management capabilities (e.g., maintaining the user group information 121 for the predefined user group 110 using one or more structured information management formats, such as Extensible Markup Language (XML), JavaScript Object Notation (JSON), or the like, as well as various combinations thereof). It will be appreciated that the IMS platform 120 may support maintenance of user group information 121 for the predefined user group 110 based on use of various other types of information management capabilities.

The user group information 121 for the predefined user group 110 may be created based on creation of the predefined user group 110 by one or more users of the 111 of the predefined user group 110 (e.g., using one or more applications or websites through which users 111 of the predefined user group 110 may create and manage the predefined user group 110). For example, one or more users 111 of the predefined user group 110 may specify the identifies of the users 111 of the predefined user group 110, contact information for the users 111 of the predefined user group 110, emergency notification preferences of the users 111 of the predefined user group 110 (e.g., devices on which to be notified, format(s) of the emergency notification(s), types of information to be provided as part of the emergency notification(s), or the like, as well as various combinations thereof), or the like, as well as various combinations thereof. The user group information 121 for the predefined user group 110 may be input by one of the users 111 of the predefined user group 110, may be input by each of the users 111 of the predefined user group 110 (e.g., each user 111 of the predefined user group 110 may have access to input and update information such as contact information, user device information, emergency notification preferences, or the like, as well as various combinations thereof), or the like, as well as various combinations thereof. It will be appreciated that the user group information 121 for the predefined user group 110 may be created in various other ways.

The user group information 121 for the predefined user group 110 may be managed in various ways. The user group information 121 for the predefined user group 110 may be updated by one or more users 111 of the predefined user group 110 (e.g., one or more of the users 111 may have access to modify various portions of the user group information 121, such as by adding users 111 to the predefined user group 110 or removing users 111 from the predefined user group 110, updating contact information of users 111, updating devices on which users 111 may be notified, updating emergency notification preference information of users 111, or the like, as well as various combinations thereof). The user group information 121 for the predefined user group 110 may be updated by one or more users 111 of the predefined user group 110 using one or more applications or websites. The user group information 121 for the predefined user group 110 may be updated automatically by one or more IMS elements, such as where location information of users 111 is tracked and updated in real time). It will be appreciated that the user group information 121 for the predefined user group 110 may be managed in various other ways.

The user group information 121 for the predefined user group 110 may include various types of information which may be used to support emergency notification services for the predefined user group 110. For example, the user group information 121 for the predefined user group 110 may include information identifying the users 111 which are members of the predefined user group 110. For example, the user group information 121 may include information for each of the users 111 of the predefined user group 110. For example, the user group information 121 for any user 111 of the predefined user group 110 may include personal information of the user 111 (e.g., name, address, or the like), user device information for the set of user devices 112 of the user 111 (e.g., a user device list indicative of the set of user devices 112 of the user 111, device types for each user device 112 of the user 111, device identifier information for each user device 112 of the user 111 (e.g., equipment identifier, phone number, IP address, or the like), or the like, as well as various combinations thereof), medical information of the user 111 (e.g., medical history, current medical providers, allergies, or the like), emergency reporting preference information of the user 111 that is configured for use in controlling reporting of an emergency experienced by the user 111 when the user 111 initiates an emergency call, emergency notification preference information of the user 111 that is configured for use in controlling the manner in which emergency notifications are provided to the user 111 when the user is the receipt of emergency notifications, or the like, as well as various combinations thereof), or the like, as well as various combinations thereof. It will be appreciated that the user group information 121 for the predefined user group 110 may include various other types of information which may be used to support emergency notification services for the users 111 of the predefined user group 110.

The emergency reporting preference information of the user 111 is configured for use in controlling reporting of an emergency experienced by the user 111 when the user 111 initiates an emergency call. The emergency reporting preference information of the user 111 may include various types of emergency reporting preference information, such as an indication of users 111 of the predefined user group 110 to be notified of the emergency, an indication of the types of emergency information which the user 111 would like included in the emergency notifications (e.g., name of the user 111 who initiated the emergency call, address of the user 111 who initiated the emergency call, current location of the user 111 who initiated the emergency call, types of relevant medical information of the user 111 who initiated the emergency call (e.g., names and contact information of preferred healthcare providers, current medications, allergies, or the like), an indication of the format in which the user 111 who initiated the emergency call would like the emergency notifications to be sent (e.g., text, audio, video, multimedia, haptic, or the like, as well as various combinations thereof), or the like, as well as various combinations thereof. It will be appreciated that the emergency reporting preference information of the user 111 may include various other types of information which may be used for controlling reporting of an emergency experienced by the user 111 when the user 111 initiates an emergency call.

The emergency reporting preference information of the user 111, which is configured for use in controlling reporting of an emergency experienced by the user 111 when the user 111 initiates an emergency call, may be provided at various granularities. For example, one set of preferences may be specified for all situations, different sets of preferences may be specified depending upon the user 111 to which the emergency notification is being sent, different sets of preferences may be specified for different types of emergencies (e.g., one set for a car accident, one set for a medical emergency, one set for a natural disaster, or the like), different sets of preferences may be specified based on temporal information (e.g., time of the year, day of the week, time of the day, or the like), different sets of preferences may be specified based on location information (e.g., the location of the user 111 initiating the emergency call, the location of the user 111 receiving the emergency notification, or the like), or the like, as well as various combinations thereof. It will be appreciated that the emergency reporting preference information of the user 111, as well as various other portions of the user group information 121 for the predefined user group 110, may be provided at various other granularities for supporting emergency notification services for the users 111 of the predefined user group 110.

The emergency notification preference information of the user 111 is configured for use in controlling the manner in which emergency notifications are provided to the user 111. The emergency notification preference information of the user 111 may include various types of emergency notification preference information, such as an indication of one or more of the user devices 112 of the user 111 on which the user 111 would prefer to receive emergency notifications (e.g., smartphone, wearable device, smart home system, or the like, as well as various combinations thereof), an indication of the format in which the user 111 would prefer to receive emergency notifications (e.g., text, audio, video, haptic, or the like, as well as various combinations thereof), an indication of the types of emergency information that the user 111 would prefer to receive as part of emergency notifications (e.g., name of the user 111 who initiated the emergency call, location of the user 111 who initiated the emergency call, emergency type of the emergency, an indication as to the status of deployment of emergency services, or the like, as well as various combinations thereof), or the like, as well as various combinations thereof. It will be appreciated that the emergency notification preference information of the user 111 may include various other types of information which may be used for controlling the manner in which emergency notifications are provided to the user 111.

The emergency notification preference information of the user 111, which is configured for use in controlling the manner in which emergency notifications are provided to the user 111, may be provided at various granularities. For example, one set of preferences may be specified for all situations, different sets of preferences may be specified depending upon the user 111 initiating the emergency call, different sets of preferences may be specified for different types of emergencies (e.g., one set for a car accident, one set for a medical emergency, one set for a natural disaster, or the like), different sets of preferences may be specified based on temporal information (e.g., time of the year, day of the week, time of the day, or the like), different sets of preferences may be specified based on location information (e.g., the location of the user 111 receiving the emergency notification, the location of the user 111 initiating the emergency call, or the like), or the like, as well as various combinations thereof. It will be appreciated that the emergency notification preference information of the user 111, as well as various other portions of the user group information 121 for the predefined user group 110, may be provided at various other granularities for supporting emergency notification services for the users 111 of the predefined user group 110.

The IMS platform 120 may be configured to use the IMS system to support emergency notification services for the predefined user group 110 by supporting detection of emergency calls initiated by users 111 of the predefined user group 110. The emergency calls by users 111 of the predefined user group 110 may be initiated using various emergency calling capabilities (e.g., dialing 911, dialing 112, dialing 999, or the like), initiated by dialing various numbers known to be associated with emergency organizations (e.g., the local number of the local police department, the local number of the local fire department, the local number of the local hospital, or the like), or the like. The emergency calls initiated by users 111 of the predefined user group 110 may be detected in the IMS system based on analysis of SIP signaling initiated within the IMS system based on initiation of such emergency calls. The emergency calls initiated by users 111 of the predefined user group 110, in addition to causing connections to public safety answering points (PSAPs) for triggering activation of emergency services for the users 111 (e.g., connections to 911 operators, dispatch of police, fire, and/or ambulance personnel, or the like, as well as various combinations thereof), also triggers activation of the emergency notification services for the predefined user group 110 as discussed further below. It will be appreciated that the IMS platform 120 may be configured to support various other functions for supporting detection of emergency calls initiated by users 111 of the predefined user group 110.

The IMS platform 120 may be configured to use the IMS system to support emergency notification services for the predefined user group 110 by supporting generation of emergency notifications for users 111 of the predefined user group 110. The generation of the emergency notifications for users 111 of the predefined user group 110 when an emergency call from one of the users 111 of the predefined user group 110 is detected may include determining the identity of the user 111 who initiated the emergency call, identifying the predefined user group 110 based on the identity of the user 111 who initiated the emergency call, identifying other users 111 of the predefined user group 110 to be notified with emergency notifications based on the emergency call, generating the emergency notifications for the other users 111 of the predefined user group 110 to be notified with emergency notifications based on the user group information 121 for the predefined user group 110, or the like, as well as various combinations thereof. It will be appreciated that the IMS platform 120 may be configured to support various other functions for supporting generation of emergency notifications for users 111 of the predefined user group 110.

The IMS platform 120 may be configured to use the IMS system to support emergency notification services for the predefined user group 110 by supporting delivery of the emergency notifications to users 111 of the predefined user group 110 to be notified with emergency notifications based on emergency calls. The delivery of the emergency notifications to users 111 of the predefined user group 110 to be notified with emergency notifications based on emergency calls may be supported using various notification delivery capabilities, including various notification platforms, protocols, or the like, as well as various combinations thereof. The delivery of the emergency notifications to users 111 of the predefined user group 110 may depend on various aspects of the emergency notifications being provided to users 111 of the predefined user group 110, such as the device types of user devices to which the emergency notifications are being provided (e.g., wireline phones, smartphones, computers, wearable devices, smart home devices, IPTVs, or the like, as well as various combinations thereof), the format(s) of the emergency notifications being provided (e.g., text notifications, audio notifications, video notifications, haptic notifications, or the like, as well as various combinations thereof), the contexts of the emergency notifications being provided (e.g., an indication of the user 111 experiencing the emergency, details of the emergency situation, or the like, as well as various combinations thereof), or the like, as well as various combinations thereof. It will be appreciated that the IMS platform 120 may be configured to support various other functions for supporting delivery of emergency notifications to users 111 of the predefined user group 110.

The IMS platform 120 may be configured to use the IMS system to support emergency notification services for the predefined user group 110 by supporting delivery of the emergency notifications to users 111 of the predefined user group 110 to be notified with emergency notifications based on emergency calls. The IMS platform 120 may support delivery of emergency notifications to users 111 of the predefined user group 110 by sending one or more of the emergency notifications to one or more of the users 111 of the predefined user group 110 directly via the IMS platform 120 using SIP signaling. For example, the IMS platform 120 may support delivery of emergency notifications to users 111 of the predefined user group 110 via the IMS platform 120 using SIP signaling based on a determination, based on the user group information 121, that the one or more users 111 has a respective preference to be notified via a user device 112 configured to receive IMS-based signaling. For example, the IMS platform 120 may support delivery of emergency notifications to users 111 of the predefined user group 110 via the IMS platform 120 using SIP signaling based on a determination that the user 111 who initiates the emergency call and the one or more users 111 are associated with a common telecommunications service provider (and, thus, connected to a common IMS network). It will be appreciated that the IMS platform 120 may support delivery of emergency notifications to users 111 of the predefined user group 110 via the IMS platform 120 using SIP signaling based on various combinations of such determinations and/or other determinations which may be made based on the user group information 121 and/or other information available to the IMS platform 120. It will be appreciated that the IMS platform 120 may be configured to support various other functions for supporting delivery of emergency notifications to users 111 of the predefined user group 110.

The IMS platform 120 may be configured to use the IMS system to support emergency notification services for the predefined user group 110 by supporting delivery of the emergency notifications to users 111 of the predefined user group 110 to be notified with emergency notifications based on emergency calls. The IMS platform 120 may support delivery of emergency notifications to users 111 of the predefined user group 110 by sending one or more of the emergency notifications to a customer premises gateway of the user 111 who initiates the emergency call. For example, the IMS platform 120 may support delivery of emergency notifications to users 111 of the predefined user group 110 via the customer premises gateway of the user 111 who initiates the emergency call based on a determination, based on the user group information 121, that the one or more users 111 have a respective preference to be notified via a user device unable to receive IMS-based signaling. For example, the IMS platform 120 may support delivery of emergency notifications to users 111 of the predefined user group 110 via the customer premises gateway of the user 111 who initiates the emergency call based on a determination, based on the user group information 121, that the one or more users 111 has a respective preference to be notified via a messaging platform. It will be appreciated that the IMS platform 120 may support delivery of emergency notifications to users 111 of the predefined user group 110 via the customer premises gateway of the user 111 who initiates the emergency call based on various combinations of such determinations and/or other determinations which may be made based on the user group information 121 and/or other information available to the IMS platform 120. It will be appreciated that the customer premises gateway of the user 111 who initiates the emergency call may then support sending of the received emergency notifications to users 111 of the predefined user group 110 in various ways (e.g., using various types of notification frameworks, notification types, signaling frameworks, signaling types, messaging platforms, message types, protocols, protocol conversions, data conversions or mappings, or the like, as well as various combinations thereof). It will be appreciated that the IMS platform 120 may be configured to support various other functions for supporting delivery of emergency notifications to users 111 of the predefined user group 110.

The IMS platform 120 may be configured to use the IMS system to support emergency notification services for the predefined user group 110. The emergency notifications, as indicated above, may be provided to various types of devices, may be provided in various formats, may include various types of information related to the emergency call, may include various types of emergency status update information, or the like, as well as various combinations thereof. For example, the emergency notifications may be provided to various types of devices, such as phones (e.g., wireline phones, wireless phones, smartphones, or the like), computers (e.g., desktops, laptops, tablets, or the like), televisions, smart home devices (e.g., smart home control devices, smart appliances, smart lights, or the like), gaming systems, wearable devices (e.g., smart watches, fitness trackers, heads-up displays for AR or VR systems, or the like), car infotainment devices, or the like, as well as various combinations thereof. For example, the emergency notifications may be provided in various formats, such as text-based notifications, image-based notifications, audio-based notifications, video-based notifications, multimedia notifications, haptic notifications (vibrations, tactile notifications, or the like), augmented reality (AR) notifications, virtual reality (VR) notifications, projection-based notifications, light-based notifications, scent-based notifications, or the like, as well as various combinations thereof. For example, the emergency notifications may include various types of information related to the emergency call such as the identity of the emergency caller (e.g., name, number, or the like), personal information of the emergency caller (e.g., address, list of contacts, medical history, or the like), the location of the emergency caller (e.g., address, GPS coordinates, PSAP-resolved locations, or the like), the type of emergency being experienced (e.g., accident, medical emergency, or the like), an indication as to emergency services personnel that have or will be dispatched for the emergency, or the like, as well as various combinations thereof. For example, the emergency notifications may include various types of emergency status update information which may be provided periodically or in response to status changes (e.g., changes to the status of the emergency, changes to the status of the dispatch of emergency services personnel or resources, changes to the location of the emergency caller, or the like, as well as various combinations thereof). It will be appreciated that the emergency notifications may be provided to various other types of devices, may be provided in various other formats, may include various other types of information related to the emergency call, may include various other types of emergency status update information, or the like, as well as various combinations thereof. It will be appreciated that various combinations of such characteristics of emergency notifications may be utilized in order to provide various types of notifications, at least some of which are discussed further below, to the members of a predefined user group.

The IMS platform 120 may be configured to use the IMS system to support emergency notification services for the predefined user group 110. The emergency notifications, as indicated above, may be provided using various types of notifications. For example, emergency notifications may include one or more of SMS message notifications (e.g., SMS messages may be sent to smartphones or other devices of group members), pre-recorded voice message notifications (e.g., pre-recorded voice messages may be sent to the phones of group members), IPTV notifications (e.g., IPTV notifications may be displayed on the household television screens of group members), smart home device alerts (e.g., smart home device alerts may be provided through integration with a residential gateway CPE, triggering notifications on smart home assistant devices), mobile application notifications (e.g., mobile application notifications may be provided via a custom application that also provides live tracking chat functions, emergency resources, or the like, as well as various combinations thereof), wearable device notifications (e.g., wearable device notifications may be provided in the form of on-screen messages or vibrations on smartwatches and fitness trackers), AR notifications (e.g., visual and/or audible notifications may be presented in a heads-up display of an AR system), VR notifications (e.g., visual and/or audible notifications may be presented in a heads-up display of a VR system), smart lighting system alerts (e.g., smart lighting system alerts may be triggered on smart lighting systems, such as by changing the hue or color of one or more lights, causing flashing of a pattern on one or more lights, or the like), digital photo frame notifications (e.g., visual notifications may be displayed on connected photo frames), social media direct messaging notifications (e.g., social media direct messages may be provided via various social media applications, thereby ensuring fast and direct communication), email messages (e.g., email messages, including various details of the emergency call, may be delivered to email boxes), car infotainment system alerts (e.g., car infotainment system alerts may be provided in the form of verbal or visual messages through car infotainment systems), geofencing alerts (e.g., notifications may be sent to group members in close proximity to the location of the emergency caller, enabling quicker responses from nearby contacts), automatic group video calls (e.g., group video calls may be automatically triggered via any suitable video calling applications, thereby enabling immediate coordination among group members), community-based notifications (e.g., community-based notifications may be provided to alert trusted neighbors or designated contacts for quicker on-site assistance), public emergency kiosk notifications (e.g., public emergency notifications may be displayed at public digital kiosks or bus stop screens for localized alerts), silent notifications (e.g., discreet notifications may be sent in situations where security or privacy is important (e.g., domestic violence)), medical facility alerts (e.g., alerts may be sent to hospitals or healthcare providers, enabling healthcare facilities to prepare for arrival of a patient(s)), drone deployment alerts (e.g., drones equipped with various equipment or supplies (e.g., cameras, medical supplies, or the like) may be automatically deployed for remote assistance), or the like, as well as various combinations thereof. It will be appreciated that the emergency notifications may be provided using various other types of notifications.

The IMS platform 120, as indicated above, may be configured to use the IMS system to support emergency notification services for the predefined user group 110, including using the IMS system to create and maintain (in real-time) the user group information 121 for the predefined user group 110 (including the individual user preferences of the members of the predefined user group 110), identify when an emergency call is initiated, determine the identity of the device from which the emergency call is made, determine the geolocation of the device from which the emergency call was made, determine the other members of the predefined user group 110 associated with the device from which the emergency call was made, determine the user preferences of each member of the predefined user group 110, prepare notifications to the other members of the predefined user group 110 using their preferred notification format (synced with emergency service responses) and optionally based on geolocation and/or geofencing of the geolocation of each member of the predefined user group 110, send the prepared notifications (using advanced encryption protocols and secure data handling practices to safeguard sensitive, private information), initiate group call among other members of the predefined user group 110 for real-time communication and coordination of the user group members to the emergency call, receive feedback from the members of the predefined user group 110, relay group member feedback to emergency services for coordinated response efforts, prepare and send live update notifications (e.g., on the status of the emergency caller, user group feedback, availability of other user group members, status of other user group members, or the like, as well as various combinations thereof) to each member of the predefined user group 110, or the like, as well as various combinations thereof. It will be appreciated that the IMS platform 120 may be configured to support various other functions for supporting use of the IMS system to support emergency notification services for the predefined user group 110.

The IMS platform 120, as indicated above, may be configured to use the IMS system to support emergency notification services for the predefined user group 110. The IMS platform 120 may be configured to use the IMS system to support emergency notification services for the predefined user group 110 by maintaining user group information 121 for the predefined user group 110, detecting emergency calls initiated by users 111 of the predefined user group 110, generating emergency notifications for users 111 of the predefined user group 110 based on the user group information 121 for the predefined user group 110 when emergency calls initiated by users 111 of the predefined user group 110 are detected, supporting delivery of the emergency notifications for the other users 111 of the predefined user group 110 to be notified with emergency notifications based on the emergency call, or the like, as well as various combinations thereof. It is noted that the operation of the IMS platform 120 in providing such functions for supporting emergency notification services for the predefined user group 110 may be further understood by further considering various aspects of the manner in which such functions may be implemented within the context of the IMS system, both based on existing capabilities of the IMS system as well as extension to various aspects of the IMS system, as discussed further below.

The IMS platform 120 is based on IMS, which provides a flexible architecture for handling multimedia services across IP networks. The IMS platform 120 may be configured to support various aspects of the emergency notification service based on various capabilities of IMS (e.g., based on various IMS messaging components, messaging approaches, protocols, or the like, as well as various combinations thereof). For example, various aspects of the emergency notification service may be provided based on SIP signaling, the SIP MESSAGE method, the XML Configuration Access Protocol (XCAP), the Presence and Event Package, the SIP Subscribe/Notify process, the SIP MESSAGE for Multimedia Services, the DIAMETER Protocol (for Subscriber Data Management), Rich Communication Services (RCS), SMS over IMS, PUSH Over IMS, or the like, as well as various combinations thereof.

For example, various aspects of the emergency notification service may be provided based on SIP signaling. SIP is the core signaling protocol in IMS, responsible for establishing, modifying, and terminating multimedia sessions. SIP can handle real-time communication, such as voice and video calls, between users. SIP INVITE may be used to detect the initiation of an emergency call. When an emergency call is placed (e.g., to 911, 112, 999, or the like) and detected, SIP signaling can trigger a parallel SIP INVITE message to initiate notifications to members of predefined user groups. SIP can also handle media negotiation (e.g., voice, video, or the like) between devices for real-time interaction, such as initiating a group call after an emergency event. The SIP MESSAGE method may be used for simple notifications like SMS or short emergency alerts to mobile applications. The SIP INVITE method or other methods may be used to establish multimedia sessions for real-time communications (e.g., voice messages, group video calls, or the like). SIP signaling enables text-based notifications and/or real-time multimedia notifications across various devices, including phones, smartwatches, smart home systems, or the like, as well as various combinations thereof. It will be appreciated that SIP may be utilized in various other ways for supporting emergency notifications within the context of the emergency notification service.

For example, various aspects of the emergency notification service may be provided based on the SIP MESSAGE method. The SIP MESSAGE is used to send instant text messages between users or applications within an IMS framework. This method can be used for sending emergency notifications via text, where such emergency notifications may include emergency notification information such as the identity of the emergency caller, the location of the emergency caller, the emergency type, or the like, as well as various combinations thereof. The emergency notification can be triggered in real time, and the text message can be delivered to a group of predefined users in parallel via SIP MESSAGE requests. It will be appreciated that the SIP MESSAGE method may be utilized in various other ways for supporting emergency notifications within the context of the emergency notification service.

For example, various aspects of the emergency notification service may be provided based on use of XCAP. XCAP is used for managing XML documents in the IMS framework, often related to presence and group communication services. XCAP can be used to manage predefined user groups, including creating predefined user groups, updating group membership of predefined user groups (e.g., adding and/or removing members of the group), or the like, as well as various combinations thereof. XCAP can be used to manage predefined user groups by creating, storing, and updating XML documents that define the predefined user groups (e.g., identification of the group members, emergency notification preferences of the members of the predefined user group, or the like, as well as various combinations thereof). When an emergency call is detected, XCAP can be used to retrieve the user group information of the predefined user group to determine the set of users to notify with emergency notifications and the manner in which the users are to be notified. It will be appreciated that XCAP may be utilized in various other ways for supporting emergency notifications within the context of the emergency notification service.

For example, various aspects of the emergency notification service may be provided based on the Presence and Event Package (e.g., RFC 3265, RFC 3903, or the like, as well as various combinations thereof) of the IMS system. The Presence service allows users to be notified of the availability and status of other users. In IMS, presence is managed using SIP and related protocols. The Presence service can be extended to handle emergency events. For example, the system can update the presence status of the caller to indicate an emergency event, which can then be subscribed to by other group members. Using SIP SUBSCRIBE and NOTIFY methods, other group members can receive notifications about the emergency event, including emergency detail information such as the identity of the emergency caller, the location of the emergency caller, the ongoing status of the emergency, or the like, as well as various combinations thereof. It will be appreciated that the Presence and Event Package may be utilized in various other ways for supporting emergency notifications within the context of the emergency notification service.

For example, various aspects of the emergency notification service may be provided based on the SIP Subscribe/Notify process (e.g., based on RFC 6665 or other related standards). The SIP SUBSCRIBE and NOTIFY methods are used to create a subscription to events and notify users when certain events occur. Group members can "subscribe" to notifications for emergency events for other members. Once an emergency call is detected, the system sends a SIP NOTIFY message to inform the group members of the emergency event. This could include details such as the time of the emergency call, the identity of the emergency caller, the location of the emergency caller, details of the emergency, or the like, as well as various combinations thereof. The SIP NOTIFY method is useful for enabling members to receive real-time updates on the status of the emergency, the location of the emergency caller, or the like, similar to tracking a live event. It will be appreciated that the SIP Subscribe/Notify process may be utilized in various other ways for supporting emergency notifications within the context of the emergency notification service.

For example, various aspects of the emergency notification service may be provided based on the SIP MESSAGE for Multimedia Services. SIP can support multimedia notifications, such as sending images, audio, or video clips. In addition to simple text notifications, SIP MESSAGE can be used to transmit pre-recorded voice messages or multimedia alerts. For example, when a user dials 911, a multimedia message can be sent to group members, delivering information in audio or video format. This could also be useful for IPTV notifications, where a SIP-based multimedia session is established to display emergency messages on a TV screen. It will be appreciated that SIP MESSAGE for Multimedia Service may be utilized in various other ways for supporting emergency notifications within the context of the emergency notification service.

For example, various aspects of the emergency notification service may be provided based on use of the DIAMETER protocol for subscriber data management. DIAMETER is a protocol used in IMS for authentication, authorization, and accounting (AAA), subscriber data management, and so forth. DIAMETER can be used for accessing user group information of predefined user groups (e.g., group-specific data, user-specific data, or the like, as well as various combinations thereof), determining eligibility for receiving emergency notifications, ensuring that the emergency notification services are authorized for the specific users involved, or the like, as well as various combinations thereof. DIAMETER can also handle records management functions for the notification service (e.g., logging that emergency notifications were sent to certain group members). It will be appreciated that the DIAMETER protocol may be utilized in various other ways for supporting emergency notifications within the context of the emergency notification service.

For example, various aspects of the emergency notification service may be provided based on use of RCS. RCS is an enhanced messaging platform built on IMS to provide features like group messaging, file sharing, video calls, multimedia messaging, and location sharing in real-time. RCS can serve as a useful and efficient platform for rich notifications. For example, when an emergency call is made, RCS can deliver a group notification that includes not only text but also multimedia content (e.g., images of the location, voice memos, video messages, or the like, as well as various combinations thereof), live location sharing via an RCS group chat, or the like, as well as various combinations thereof. This would enable real-time collaboration between group members (e.g., via rich multimedia messaging and alerts) as the group members learn of and respond to the emergency. It will be appreciated that RCS may be utilized in various other ways for supporting emergency notifications within the context of the emergency notification service.

For example, various aspects of the emergency notification service may be provided based on SMS over IMS. SMS in IMS networks is handled using SIP signaling (often via IMS-SMS interworking with a legacy SMS-C) to deliver text-based SMS messages. IMS can send emergency alerts via SMS, leveraging the same SIP MESSAGE method or using an IMS-SMS gateway to ensure delivery, even if the device of the recipient is on a legacy network (e.g., Global System for Mobile (GSM), Universal Mobile Telecommunications System (UMTS), or the like). This allows the emergency notification system to send SMS notifications seamlessly to all group members, regardless of network compatibility of the devices of the recipients. It will be appreciated that SMS over IMS may be utilized in various other ways for supporting emergency notifications within the context of the emergency notification service.

For example, various aspects of the emergency notification service may be provided based on use of PUSH over IMS. IMS can handle push notifications for connected devices like smartphones (e.g., via mobile applications on the smartphones), IoT devices, or the like, as well as various combinations thereof. For example, push notifications can be sent via IMS to mobile applications or smart home devices, alerting family members about an emergency event. The push notifications may include critical information such as the identity of the emergency caller, the location of the emergency caller, or the like, as well as various combinations thereof. The push mechanism could be real-time, enabling rapid response even when group members are not actively using their devices. It will be appreciated that PUSH over IMS may be utilized in various other ways for supporting emergency notifications within the context of the emergency notification service.

It will be appreciated that various aspects of the emergency notification service may be provided based on various other capabilities of IMS (e.g., based on various other IMS messaging components, various other messaging approaches, various other protocols, or the like, as well as various combinations thereof).

The IMS platform 120, as described above, may be configured to support various aspects of the emergency notification service based on various capabilities of IMS (e.g., based on various IMS messaging components, messaging approaches, protocols, or the like, as well as various combinations thereof). The IMS platform 120 may be configured to support detection of emergency calls from users 111 of the predefined user group 110 and triggering of emergency notifications to users 111 of the predefined user group 110 based on detection of emergency calls from users 111 of the predefined user group 110. For example, when a user 111 of the predefined user group 110 initiates an emergency call (e.g., dialing 911 or other emergency number), the IMS platform 120 detects the event via SIP INVITE, queries the user group information 111 using XCAP or DIAMETER (e.g., information stored in XCAP or in subscriber profiles) to retrieve relevant portions of the user group information 111 (e.g., identities of users 111 to be notified, device information for user devices 112 on which users 111 are to be notified, notification preferences of users 111 to be notified, or the like, as well as various combinations thereof), and uses IMS methods and related capabilities to send emergency notifications through various notification platforms and channels (e.g., SMS, SIP NOTIFY, SIP MESSAGE, RCS, or the like, as well as various combinations thereof). The emergency notifications may be sent through the various notification platforms and channels, in various formats and including various types of information, in various ways. For example, SIP NOTIFY or MESSAGE methods may be used to send real-time text, multimedia, or presence-based notifications. For example, for richer notification experiences which may include multimedia and/or interactive notifications (e.g., IPTV alerts, smart home notifications, or the like), the IMS system may use SIP sessions for multimedia messaging, RCS for multimedia messaging, Extensible Messaging and Presence Protocol (XMPP) for real-time messaging, Message Queuing Telemetry Transport (MQTT) protocol for publishing notifications, Simple Network Management Protocol (SNMP) for various types of notifications, web services Application Programming Interfaces (APIs) for various types of notifications, other available IP-based communication APIs for various types of notifications, or the like, as well as various combinations thereof. For example, presence updates may be supported for enabling group members to receive live updates (e.g., via SIP SUBSCRIBE/NOTIFY) on the status of the emergency caller (e.g., location updates, status updates, or the like, as well as various combinations thereof). It will be appreciated that various aspects of the emergency notification service may be provided based on various other capabilities of IMS (e.g., based on various other IMS messaging components, various other messaging approaches, various other protocols, or the like, as well as various combinations thereof).

The IMS platform 120 may be configured to support various aspects of the emergency notification service based on various other capabilities which may be used in combination with various IMS capabilities of the IMS system (e.g., through one or more of integration with the IMS system, support for interfacing with the IMS system, or the like, as well as various combinations thereof). For example, sending an IMS INVITE message to third-party platforms, such as social media platforms and messaging platforms, is often difficult or even not possible through standard means as these platforms generally do not use the open IMS architecture or SIP in the traditional sense. In at least some example embodiments, delivery of emergency notifications to such third-party platforms may be supported based on use of third-party APIs provided by the third-party platform providers, based on use of interworking gateways to support interworking between the IMS system and the third-party platforms, based on use of Web Real-Time Communications (WebRTC) capabilities, or the like, as well as various combinations thereof.

In at least some example embodiments, delivery of emergency notifications to third-party platforms may be supported based on use of third-party APIs provided by the third-party platform providers. For example, a third-party platform provider API (e.g., a REST API) may be used to send emergency notifications by sending HTTP requests to send messages to users or initiate conversations between users. For example, a third-party platform provider API (e.g., a Graph API) may be used to send emergency notifications by sending messages through interaction with a proprietary messaging system of the third-party platform provider through REST API calls. It will be appreciated that delivery of emergency notifications to third-party platforms based on use of third-party APIs may be supported in various other ways.

In at least some example embodiments, delivery of emergency notifications to third-party platforms may be supported based on use of interworking gateways to support interworking between the IMS system and the third-party platforms. The interworking gateways (e.g., messaging proxies or other forms of interworking gateways) may be configured to translate between IMS/SIP protocols and proprietary protocols used by third-party platforms such as social media platforms and messaging platforms. For example, one type of interworking gateway which may be used is a SIP-to-REST gateway, which is an interworking gateway that can receive a SIP INVITE message, translate the SIP INVITE message into a new message having a message format that is compatible with the API of the third-party platform, and initiate the message or session on the third-party platform. It is noted that this could involve complex signaling translation, including call/session metadata mapping. For example, another type of interworking gateway which may be used is a VoIP service provider bridging gateway (e.g., at least some VoIP providers offer services to bridge IMS/SIP to other messaging platforms) configured to allow delivery of emergency notifications via the proprietary messaging applications of third-party platforms. It is noted that this may involve using APIs provided by such VoIP service providers.

In at least some example embodiments, delivery of emergency notifications to third-party platforms may be supported based on use of WebRTC capabilities. WebRTC, while not currently supporting use of IMS INVITE directly, is based on similar underlying principals and works with signaling protocols such as SIP for call setup in some cases. In at least some such cases, proprietary capabilities of the third-party platforms (e.g., APIs, Software Development Kits (SDKs), or the like) may be used to initiate messages, calls, or sessions. By leveraging existing IMS standards and protocols, the system can efficiently handle diverse notification methods while maintaining compatibility with both fixed-line networks as well as wireless networks.

It will be appreciated that delivery of emergency notifications to third-party platforms may be supported in various other ways.

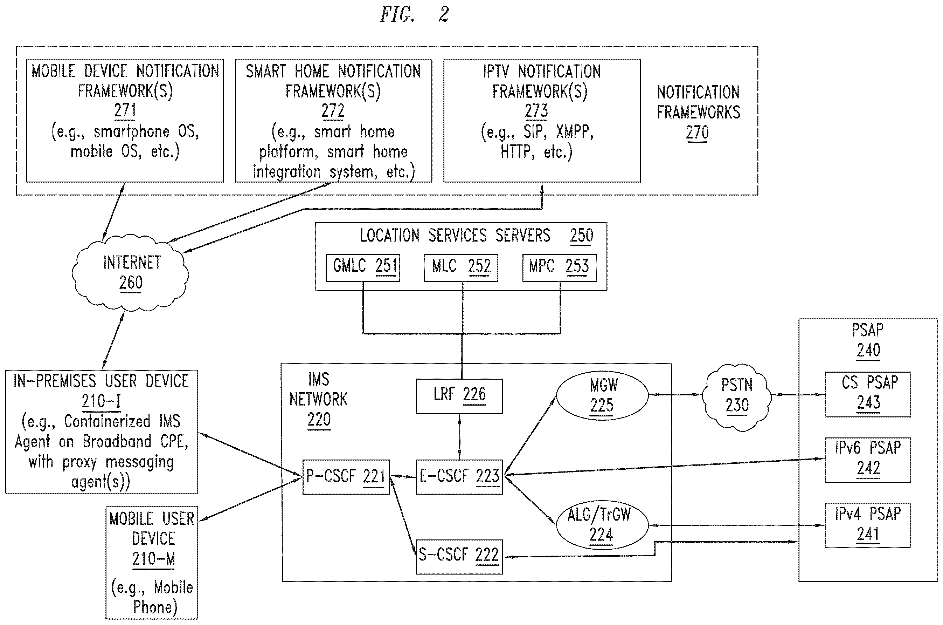

It will be appreciated that various example embodiments of the emergency notification capability may be further understood by considering an example implementation of the system of FIG. 1 as presented with respect to FIG. 2.

FIG. 2 depicts an example embodiment of a system including an IMS platform configured to support emergency notification services for a predefined user group.

The system 200 includes various elements configured to support emergency notification services for a predefined user group. The system 200 includes a pair of user devices 210, an IMS network 220, a public switched telephone network (PSTN) 230, a PSAP 240, a set of location services servers 250, the Internet 260, and a set of notification frameworks 270. The pair of user devices 210 includes an in-premises user device 210-1 and a mobile user device 210-M. The IMS network 220 includes a Proxy CSCF (P-CSCF) 221, a Serving (S-CSCF) 222, an Emergency CSCF (E-CSCF) 223, an ALG/TrGW 224, an MGW 225, and an LRF 226. The PSAP 240 includes an IPv4 PSAP 241, an IPv6 PSAP 242, and a CS PSAP 243. The location services servers 250 include a Gateway Mobile Location Center (GMLC) 251, a Mobile Location Center (MLC) 252, and a Mobile Positioning Center (MPC) 253. The notification frameworks 270 include a mobile device notification framework(s) 271, a smart home notification framework(s) 272, and an IPTV notification framework(s) 273. It will be appreciated that the system 200 may include various other elements which may be utilized to support emergency notification services for predefined user groups. The system 200 is configured to support various functions for supporting emergency notification services for a predefined user group, as discussed further below.

The user devices 210 are configured to connect to the IMS network 220 for enabling the user of the user devices 210 to place emergency calls using the user devices 210 and for enabling delivery of emergency notifications when any of the users of the predefined user group initiate emergency calls. The user devices 210 interface with the IMS network 220 via the P-CSCF 221. The user devices 210, as indicated above, may be used by the user of the user devices 210 to initiate emergency calls through the IMS network 220 via the P-CSCF 221, where such emergency calls may be received by the P-CSCF 221 and routed by the P-CSCF 221 toward the PSAP 240. The user devices 210, as indicated above, also may be configured to receive emergency notifications from the IMS network 220 (e.g., from the E-CSCF 223 via the P-CSCF 221), including emergency notifications intended for delivery to other users of the predefined user group when the user of the user devices 210 initiates an emergency call and emergency notifications intended for delivery to the user of the user devices 210 when other users of the predefined user group initiate emergency calls. In this manner, the IMS network 220 is configured to support various aspects of the emergency notification service for the user of the user devices 210, including enabling the user of the user devices 210 to initiate emergency calls and have other users of the predefined user group receive emergency notifications and enabling the user of the user devices 210 to receive emergency notifications when other users of the predefined user group initiate emergency calls.

The user devices 210, as indicated above, are configured to connect to the IMS network 220 for enabling the user of the user devices 210 to place emergency calls using the user devices 210 and for enabling delivery of emergency notifications when any of the users of the predefined user group initiate emergency calls. The user devices 210 include the in-premises user device 210-I of the user and the mobile user device 210-M of the user. For example, the in-premises user device 210-I may be a customer premises gateway device (e.g., a customer premises equipment (CPE) or other device) configured to interface with the IMS network 220. For example, in a residential scenario the in-premises user device 210-1 may be an in-home residential gateway, in a business scenario the in-premises user device 210-I may be a customer premises gateway deployed at a business location, or the like. For example, as illustrated, the in-premises user device 210-I may include a containerized IMS agent on a broadband CPE with one or more proxy messaging agents configured to support delivery of emergency notifications. The containerized IMS agent may be configured to perform various emergency notifications functions as presented herein. For example, the mobile user device 210-M may be a mobile user device configured to interface with the IMS network 220. For example, as illustrated, the mobile user device 210-M may be a mobile phone (e.g., a UE or other similar device), although it will be appreciated that other types of mobile user devices may be used. It will be appreciated that the user may have various other devices associated therewith (e.g., for placing emergency calls and/or receiving emergency notifications when other users of the predefined user group place emergency calls).

The IMS network 220 is configured to support various interfaces to the PSAP 240 for supporting routing of emergency calls, received via the user devices 210, to the PSAP 240. For example, the IMS network 220 is configured to communicate with the PSAP 240 via the S-CSCF 222 based on an interface between the P-CSCF 221 and the S-CSCF 222. For example, the IMS network 220 is configured to communicate with specific PSAP types (illustratively, IPv4 PSAP 241, IPv6 PSAP 242, and CS PSAP 243) using various elements of the IMS network 220. For example, the IMS network 220 is configured to direct emergency calls to the IPv4 PSAP 241 via the P-CSCF 221, the E-CSCF 223, and the ALG/TrGW 224 based on an interface between the ALG/TrGW 224 and the IPv4 PSAP 241. For example, the IMS network 220 is configured to direct emergency calls to the IPv6 PSAP 242 via the P-CSCF 221 and the E-CSCF 223 based on an interface between the E-CSCF 223 and the IPv6 PSAP 242. For example, the IMS network 220 is configured to direct emergency calls to the CS PSAP 243 via the P-CSCF 221, the E-CSCF 223, and the MGW 225 based on an interface between the MGW 225 and the CS PSAP 243 via the PSTN 230. In this manner, the IMS network 220 is configured to support routing of emergency calls from various types of user devices based on routing of the emergency calls to the different PSAP types (namely, the IPv4 PSAP 241, the IPv6 PSAP 242, and the CS PSAP 243) available at the PSAP 240.

The IMS network 220 is configured to support an interface to the set of location services servers 250 in order to support retrieval of location information for routing of emergency personnel to the user and for inclusion in emergency notifications sent when the user initiates emergency calls. For example, the IMS network 220 is configured to support interactions with each of the location services servers 250 (illustratively, GMLC 251, MLC 252, and MPC 253) via an interface between the LRF 226 of the IMS network 220 and the location services servers 250 and an interface between the LRF 226 and the E-CSCF 223. The IMS network 220 may retrieve location information for the user of the user devices 210 from the set of location services servers 250, based on detection of an emergency call initiated by the user using one of the user devices 210, for providing the location information to the PSAP 240 based on the emergency call and/or for inclusion of the location information in emergency notifications sent to other users of the predefined user group based on the emergency call. The IMS network 220 may retrieve location information for the user of the user devices 210 from the set of location services servers 250, after the initial detection of the emergency call, for providing updated location information to the other users of the predefined user group as the emergency unfolds and is resolved. In this manner, the IMS network 220 is configured to support retrieval of user location information of the user of the user devices 210 for supporting emergency handling functions and emergency notification services functions.

The IMS network 220 is configured to support delivery of emergency notifications from the IMS network 220 via the P-CSCF 221, including emergency notifications intended for delivery to other users of the predefined user group when the user of the user devices 210 initiates an emergency call and emergency notifications intended for delivery to the user of the user devices 210 when other users of the predefined user group initiate emergency calls. For example, the in-premises user device 210-I may receive emergency notifications from the IMS network 220 via the P-CSCF 221 when the user of the user devices 210 initiates emergency calls, and the in-premises user device 210-1 may support further delivery of those emergency notifications to the other users of the predefined user group (e.g., by sending emergency notifications to one or more of the notification frameworks 270 for delivery to the other users of the predefined user group). For example, the UE devices 210 may receive emergency notifications from the IMS network 220 via the P-CSCF 221, for delivery to the user of the user devices 210, when other users of the predefined user group initiate emergency calls (e.g., for presentation to the user of the user devices 210 via the mobile user device 210-M, for presentation to the user of the user devices 210 via one or more other devices associated with the in-premises user device 210-I, or the like, as well as various combinations thereof). In this manner, the IMS network 220 is configured to support delivery of emergency notifications to users of the predefined user group, including enabling other users of the predefined user group to receive notifications when the user of the user devices 210 initiates emergency calls and enabling the user of the user devices 210 to receive emergency notifications when other users of the predefined user group initiate emergency calls.

The in-premises user device 210-I may be configured to support delivery of emergency notifications to other users of the predefined user group when the user of the user devices 210 initiates emergency calls. The in-premises user device 210-1 may be configured to support delivery of emergency notifications to other users of the predefined user group when the user of the user devices 210 initiates emergency calls, irrespective of whether the user initiates the emergency call using a device that is connected to the in-premises user device 210-I or whether the user initiates the emergency call using some other device associated with the user (e.g., the mobile user device 210-M). The in-premises user device 210-I may be configured to support delivery of emergency notifications to other users of the predefined user group, when the user of the user devices 210 initiates an emergency call, by receiving the emergency notifications from the IMS network 220 and triggering delivery of emergency notifications to the other users of the predefined user group. The in-premises user device 210-I may support delivery of the emergency notifications to the other users of the predefined user group by simply forwarding the received emergency notifications toward user devices of other users of the predefined user group (e.g., where the received emergency notifications may be forwarded without any modifications being needed), generating new emergency notifications based on the received emergency notifications and forwarding the new emergency notifications toward user devices of other users of the predefined user group (e.g., for translating between message types, protocols, or the like, as well as various combinations thereof, which may depend on factors such as the type(s) of devices(s) to which the emergency notifications are to be delivered, the type(s) of platform(s) via which the emergency notifications are to be delivered, the type(s) of content included in the emergency notifications, or the like, as well as various combinations thereof), or the like, as well as various combinations thereof). For example, in-premises user device 210-I may support delivery of the emergency notifications to the other users of the predefined user group based on one or more of signaling translations (which may or may not include call/session metadata mapping), message translations, format translations, protocol translations, or the like, as well as various combinations thereof. It will be appreciated that the in-premises user device 210-I may be configured to support various other functions for supporting delivery of emergency notifications to other users of the predefined user group when the user of the user devices 210 initiates emergency calls.

It will be appreciated that various other capabilities of the emergency notification services as presented with respect to the system 100 of FIG. 1 may be provided within the context of the system 200 of FIG. 2.

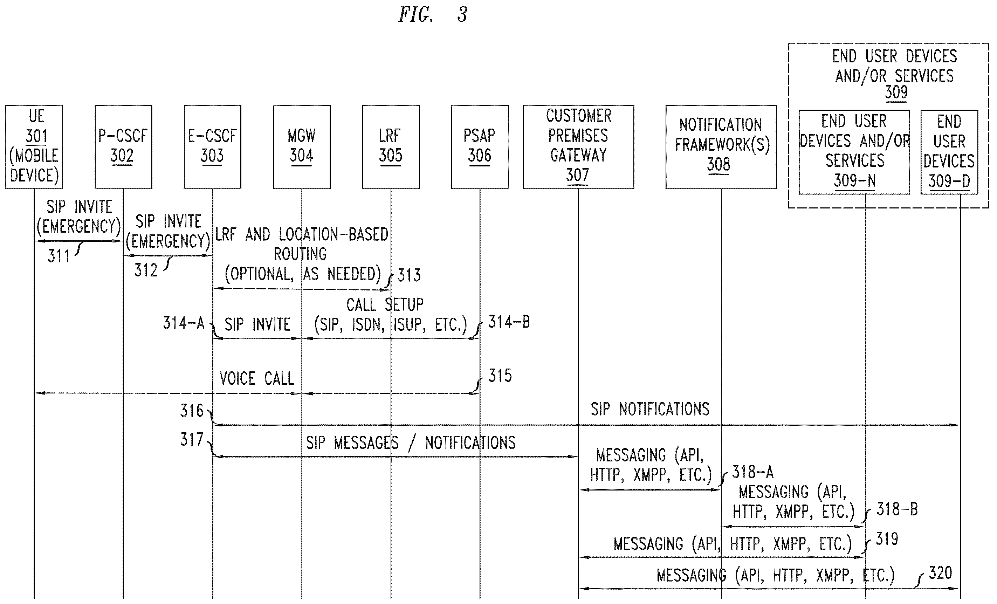

FIG. 3 depicts an example embodiment of a signaling flow configured to support emergency notification services for a predefined user group.

As depicted in FIG. 3, the signaling flow 300 is performed within the context of an IMS-based system, such as the system 100 of FIG. 1 or the system 200 of FIG. 2. The signaling flow 300 includes signaling for supporting emergency call handling and emergency call notification services for emergency calls based on a set of elements, including elements of the IMS system, the PSAP, and devices of users of the predefined user group. As depicted in FIG. 3, elements which may be involved in various aspects of the signaling flow 300 include a UE 301 of the user of the predefined user group which initiates the emergency call, elements of the IMS system (illustratively, a P-CSCF 302, an E-CSCF 303, an MGW 304, and an LRF 305), a PSAP 306, a customer premises gateway 307, a set of notification frameworks 308, a set of end user devices and/or services 309 of other users of the predefined user group where the set of end user devices and/or services 309 includes end user devices 309-D which are directly accessible via the IMS system and end user devices and/or services 309-N which are not directly accessible via the IMS system). It will be appreciated that various other elements, although omitted for purposes of clarity, may be involved in supporting emergency call handling and emergency call notification services for emergency calls by users of the predefined user group.

As depicted in FIG. 3, the signaling flow 300 includes signaling for supporting emergency call handling. The user initiates an emergency call using the UE 301. The UE 301, based on initiation of the emergency call, sends a SIP INVITE (Emergency) message to the P-CSCF 302 (indicated by 311). The P-CSCF 302 sends a SIP INVITE (Emergency) message to the E-CSCF 303 (indicated by 312). The E-CSCF 303 optionally obtains location information, indicative of the location of the user that initiates the emergency call, based on signaling with the LRF 305 (indicated by 313). The E-CSCF 303 sends a SIP INVITE message to MGW 304 (indicated by 314-A) which triggers the MGW 304 to negotiate call setup with the PSAP 306 (indicated by 314-B). It is noted that the call setup by the MGW 304 with the PSAP 306 may be based on SIP, Integrated Services Digital Network (ISDN), ISDN User Part (ISUP), or the like, as well as various combinations thereof. The call setup may optionally result in establishment of a voice call between the UE 301 of the user and the PSAP 306 via the MGW 304 (indicated by 315), thereby enabling the user of the UE 301 to interact with emergency services personnel of the PSAP 306.

As depicted in FIG. 3, the signaling flow 300 includes signaling for supporting emergency notification services. The E-CSCF 303, based on detection of the emergency call by the user, utilizes emergency notification services for notifying other users of the predefined user group that the user has initiated an emergency call. The E-CSCF 303 identifies the predefined user group, retrieves the user group information for the predefined user group (including indications of the other users which are to receive emergency notifications, notification preferences of the other users which are to receive emergency notifications (e.g., devices on which emergency notifications are to be received, formats of the emergency notifications, or the like), and so forth), generates emergency notifications for the other users of the predefined user group, and sends the emergency notifications for the other users of the predefined user group for delivery to the other users of the predefined user group. As illustrated in FIG. 3, the manner in which the emergency notifications are delivered to the other users of the predefined user group may depend on various factors, such as notification preferences of the other users, whether or not the user devices of the other users are accessible via the IMS system, or the like, as well as various combinations thereof.

As depicted in FIG. 3, the signaling flow 300 includes signaling for supporting delivery of emergency notifications to devices of the other users of the predefined user group that are directly accessible via the IMS system. This is illustrated as SIP Notifications provided from the E-CSCF 303 to the end user devices 309-D which are directly accessible via the IMS system (indicated by 316). It will be appreciated that such emergency notifications may be able to be provided where the user who initiates the emergency call and one or more other users of the predefined user group are all on the same telecommunications service provider network. For example, the E-CSCF 303 may determine from the user group information of the predefined user group that one or more of the other users would like to receive emergency notifications on mobile devices, may determine that those mobile devices are on the same telecommunications service provider network as the mobile device of the user who initiated the emergency call, and may initiate delivery of emergency notifications to those mobile devices of the other users of the predefined user group via SIP Notifications which are delivered to those mobile devices of the other users of the predefined user group via the IMS system. It will be appreciated that, although omitted for purposes of clarity, at least some of the emergency notifications also may be delivered to user devices of other users directly through the IMS system where the user who initiates the emergency call and the other users of the predefined user group are not on the same telecommunications service provider network based on configuration of the IMS system to support interfaces (e.g., with networks, services, frameworks, gateways, APIs, or the like) which enable delivery of emergency notifications to user devices in other ways (e.g., using messaging platforms, mobile applications, or the like, as well as various combinations thereof).

As depicted in FIG. 3, the signaling flow 300 includes signaling for supporting delivery of emergency notifications to devices of the other users of the predefined user group that may not be accessible via the IMS system. This is illustrated as SIP Messages/Notifications provided from the E-CSCF 303 to the customer premises gateway 307 of the user who initiated the emergency call (indicated by 317). It will be appreciated that such emergency notifications may be able to be provided even where the user who initiates the emergency call and one or more other users of the predefined user group are not all on the same telecommunications service provider network. For example, the E-CSCF 303 may determine from the user group information of the predefined user group that one or more of the other users would like to receive emergency notifications in a manner that does not permit delivery of the emergency notifications to the other users via the IMS system (e.g., on mobile devices which are not on the same telecommunications service provider network as the mobile device of the user who initiated the emergency call, via one or more notification delivery mechanisms (e.g., devices, applications, services, systems, messaging platforms, or the like) that do not currently have interface to the IMS system or that do not support interfaces to the IMS system, and may initiate delivery of emergency notifications to the other users of the predefined user group via SIP Messages/Notifications which are delivered to the customer premises gateway 307 for enabling the customer premises gateway 307 to handle further delivery of the emergency notifications to the other users of the predefined user group via various notification delivery mechanisms. The customer premises gateway 307 may then initiate delivery of the emergency notifications to the other users of the predefined user group in various ways (e.g., using various interfaces, networks, messaging platforms, APIs, or the like, as well as various combinations thereof) which may depend on various factors (e.g., capabilities of the customer premises gateway 307, device types of the user devices of the other users, device capabilities of the user devices of the other users, notification preferences of the other users for the emergency notifications, types of emergency notifications to be provided to the other users, or the like, as well as various combinations thereof).

As depicted in FIG. 3, the signaling flow 300 includes signaling for supporting delivery of emergency notifications from the customer premises gateway 307 to the other users of the predefined user group via various notification delivery mechanisms. The customer premises gateway 307 receives the SIP Messages/Notifications 317 from the E-CSCF 303 and initiates messaging for delivering the emergency notifications of the SIP Messages/Notifications 317 to the other users of the predefined user group. It will be appreciated that various notification delivery mechanisms (e.g., devices, applications, services, systems, messaging platforms, or the like) may be used for providing the emergency notifications to the other users of the predefined user group. For example, the customer premises gateway 307 may send one or more emergency notifications for delivery to one or more of the other users by initiating messaging to one or more of the notification frameworks 308 (indicated by 318-A, which may be based on one or more of API, HTTP, XMPP, or the like) which may then further deliver the emergency notifications to the other users of the predefined user group by initiating messaging to the end user devices and/or services 309-N (indicated by 318-B, which may be based on one or more of API, HTTP, XMPP, or the like, as well as various combinations thereof). For example, the customer premises gateway 307 may send one or more emergency notifications for delivery to the other users of the predefined user group by initiating messaging to the end user devices and/or services 309-N (indicated by 319, which may be based on one or more of API, HTTP, XMPP, or the like, as well as various combinations thereof). For example, the customer premises gateway 307 may send one or more emergency notifications for delivery to the other users of the predefined user group by initiating messaging to the end user devices 309-D (indicated by 320, which may be based on one or more of API, HTTP, XMPP, or the like, as well as various combinations thereof). It will be appreciated that the customer premises gateway 307 may be configured to send emergency notifications to the other users of the predefined user group via various other types of user devices, various other types of messaging capabilities, various other types of protocols, or the like, as well as various combinations thereof.

It will be appreciated that various other aspects of the emergency notification capability may be supported within the context of the signaling flow 300, within the context of the system supporting the signaling flow 300, or the like, as well as various combinations thereof.

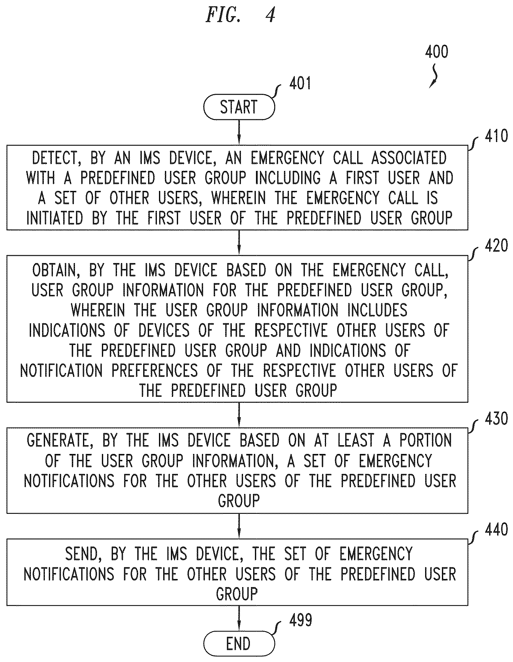

FIG. 4 depicts an example embodiment of a method for use by an IMS device to support emergency notification services for a predefined user group. It will be appreciated that, although primarily presented herein as being performed serially, at least a portion of the functions of method 400 may be performed contemporaneously or in a different order than as presented in FIG. 4. At block 401, the method 400 begins. At block 410, detect, by an IMS device, an emergency call associated with a predefined user group including a first user and a set of other users, wherein the emergency call is initiated by the first user of the predefined user group. At block 420, obtain, by the IMS device based on the emergency call, user group information for the predefined user group, wherein the user group information includes indications of respective user devices of the other users of the predefined user group and indications of respective notification preferences of the other users of the predefined user group. At block 430, generate, by the IMS device based on at least a portion of the user group information, a set of emergency notifications for the other users of the predefined user group. At block 440, send, by the IMS device, the set of emergency notifications for the other users of the predefined user group. At block 499, the method 400 ends. It will be appreciated that various capabilities presented herein with respect to FIG. 1, FIG. 2, and FIG. 3 may be incorporated within the context of the method 400 of FIG. 4.

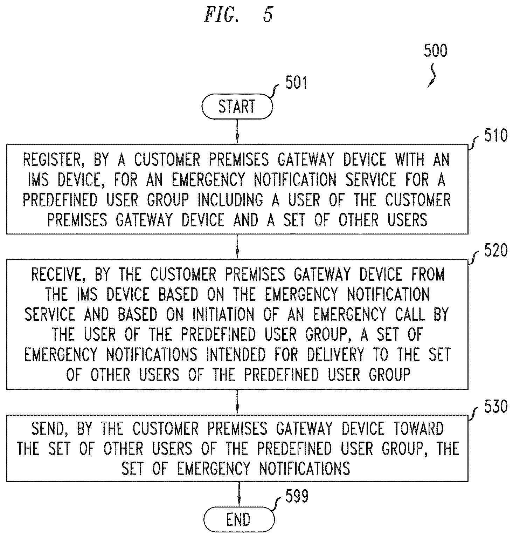

FIG. 5 depicts an example embodiment of a method for use by a customer premises gateway device to support emergency notification services for a predefined user group. It will be appreciated that, although primarily presented herein as being performed serially, at least a portion of the functions of method 500 may be performed contemporaneously or in a different order than as presented in FIG. 5. At block 501, the method 500 begins. At block 510, register, by a customer premises gateway device with an IMS device, for an emergency notification service for a predefined user group including a user of the customer premises gateway device and a set of other users. At block 520, receive, by the customer premises gateway device from the IMS device based on the emergency notification service and based on initiation of an emergency call by the user of the predefined user group, a set of emergency notifications intended for delivery to the set of other users of the predefined user group. At block 530, send, by the customer premises gateway device toward the set of other users of the predefined user group, the set of emergency notifications. At block 599, the method 500 ends. It will be appreciated that various capabilities presented herein with respect to FIG. 1, FIG. 2, and FIG. 3 may be incorporated within the context of the method 500 of FIG. 5.

Various example embodiments of the emergency notification capability may be configured to support emergency notifications in various emergency situation use cases, some of which are discussed further below. For example, various example embodiments of the emergency notification capability may be configured to support emergency notifications in emergency situation use cases such as elder care, child safety, car accidents, medical emergencies, personal safety threats, health crises, activity-based incidents, home accidents, school or daycare emergencies, special needs individuals, public transportation accidents, natural disasters or evacuations, or the like, as well as various combinations thereof.

For example, various example embodiments of the emergency notification capability may be configured to support emergency notifications in emergency situations related to elder care. An example of such a scenario would be where an elderly person living alone experiences a medical emergency (e.g., a heart attack, a stroke, a fall, or the like) and calls 911 for help. There is a need for emergency notifications in this situation because elderly individuals often have immediate family or caregivers who are concerned about their wellbeing, and automatic notifications to family members, caretakers, or even nearby neighbors can provide peace of mind, allow for faster personal assistance, and ensure that caregivers are aware of the situation as soon as possible. In this situation, family members and others can be alerted via SMS, voice messages, or smart home devices, ensuring they are informed and can coordinate to reach the elder or meet emergency responders. Additionally, geofencing could notify nearby neighbors who can arrive first to help the elder until the family members or emergency personnel can respond.

For example, various example embodiments of the emergency notification capability may be configured to support emergency notifications in emergency situations related to child safety. An example of such a scenario would be where a child, whether at home, at school, or in a public place, makes an emergency call (e.g., due to an accident, medical emergency, allergic reaction, suspicious person or situation, or the like). There is a need for emergency notifications in this situation because parents or guardians need to be immediately aware of the situation to assist the child, contact the school, or arrive at the scene. In this situation, parents can receive real-time updates on the location of their child and details of the emergency via SMS, a smartphone app, or a wearable device notification. Additionally, geofencing could notify nearby family members who can arrive first to help the child until the parents or emergency personnel can respond.

For example, various example embodiments of the emergency notification capability may be configured to support emergency notifications in emergency situations related to car accidents. An example of such a scenario would be where a family member is involved in a car accident and dials 911 for assistance. There is a need for emergency notifications in this situation because, when a car accident occurs, immediate family members often need to be informed so they can provide support, contact insurance providers, or assist with post-accident logistics (e.g., towing, hospital visits, or the like). In this situation, notifications can be sent to family members in real-time through various channels, such as SMS, car infotainment systems, or even wearable devices. Notifications could also include the location of the accident, enabling family members to arrive at the scene quickly.

For example, various example embodiments of the emergency notification capability may be configured to support emergency notifications in emergency situations related to medical emergencies. An example of such a scenario would be where an individual suffers a medical emergency (e.g., an asthma attack, diabetic shock, a severe allergic reaction, or the like) while at work, in a shopping center, or at a public event, and calls 911 for help. There is a need for emergency notifications in this situation because in medical emergencies, especially in public settings, family members may need to be contacted to provide critical medical history, meet the person at the hospital, make medical decisions, or the like. In this situation, the system can alert multiple family members simultaneously, providing the location of the caller and other important details via text, smartwatches, or smart home devices. Additionally, family members can collaborate through a group call or messaging platform to take immediate action to help the person.

For example, various example embodiments of the emergency notification capability may be configured to support emergency notifications in emergency situations related to personal safety threats. An example of such a scenario would be where a person in a domestic violence situation or under personal threat discreetly dials 911 for help. There is a need for emergency notifications in this situation because in dangerous or violent situations the person may need the immediate support of family members or trusted contacts without alerting the aggressor, and family members can provide crucial information to authorities or ensure safety plans are activated. In this situation, silent notifications can be sent to trusted family members, enabling them to assist the person without escalating the threat. They could receive a silent push notification to their phone, informing them of the danger and location of the caller.

For example, various example embodiments of the emergency notification capability may be configured to support emergency notifications in emergency situations related to health crises. An example of such a scenario would be where a person with a chronic illness or disability (e.g., epilepsy, heart disease, severe asthma, or the like) experiences a health crisis and needs to call 911 for help. There is a need for emergency notifications in this situation because family members, especially those serving as primary caregivers, need to be immediately informed to assist with providing medical history to emergency responders or coordinating hospital visits. In this situation, the system can notify family members and caregivers instantly, allowing them to reach the individual quickly or provide vital information to paramedics via smart home devices or mobile applications.

For example, various example embodiments of the emergency notification capability may be configured to support emergency notifications in emergency situations related to activity-based incidents. An example of such a scenario would be where an individual (e.g., a hiker, a cyclist, a camper, or the like) has an accident while engaging in outdoor or remote activities and calls 911 for help. There is a need for emergency notifications in this situation because, in isolated areas, accidents (e.g., falls, animal attacks, getting lost, or the like) can be life-threatening, and family members need to be informed to provide assistance or help guide emergency responders. In this situation, family members can receive the GPS location of the person (e.g., via SMS, RCS, or a wearable device notification), and can also receive updates about the status of the person until emergency responders arrive.

For example, various example embodiments of the emergency notification capability may be configured to support emergency notifications in emergency situations related to home accidents. An example of such a scenario would be where a person at home, perhaps a parent with children or an elderly individual, experiences an accident, such as a serious cut, burn, or poisoning, and calls 911 for help. There is a need for emergency notifications in this situation because family members, such as a spouse or children, need to be aware of the situation and provide help quickly, potentially contacting a neighbor or preparing to meet the person at a hospital. In this situation, the system can send notifications through multiple channels, such as IPTV, smart home devices, or SMS, ensuring family members are immediately aware and can assist.

For example, various example embodiments of the emergency notification capability may be configured to support emergency notifications in emergency situations related to school or daycare emergencies. An example of such a scenario would be where a child at school or daycare faces a medical emergency or accident, and the staff calls 911 on behalf of the child. There is a need for emergency notifications in this situation because parents or guardians need to be notified immediately in the event of an emergency involving their child, as time is critical for them to reach the child or hospital in these situations. In this situation, parents or guardians can be notified via SMS, mobile app, or wearable devices with real-time updates on the status of the child and emergency details, allowing them to react quickly.

For example, various example embodiments of the emergency notification capability may be configured to support emergency notifications in emergency situations related to special needs individuals. An example of such a scenario would be where a person with special needs or a disability (e.g., autism, cognitive impairment, or the like) makes an emergency call due to disorientation or a dangerous situation. There is a need for emergency notifications in this situation because caregivers and family members need to be notified to provide immediate support or communicate important information to responders that the person may not be able to articulate themselves. In this situation, notifications can be sent via SMS or through specialized devices like wearables, providing the family with the location and details of the incident, as well as tools to track the person.

For example, various example embodiments of the emergency notification capability may be configured to support emergency notifications in emergency situations related to public transportation accidents. An example of such a scenario would be where a family member is involved in a public transportation accident (e.g., bus crash, train crash, or the like) and calls 911 for help. There is a need for emergency notifications in this situation because public transportation accidents can involve multiple victim, and it may be hard to get immediate information, and family members would want to be informed as quickly as possible to ensure the safety of their loved ones. In this situation, real-time notifications could be sent to family members via SMS or app-based alerts, wearable device alerts, or notifications in car infotainment systems while traveling, providing details of the accident location and status updates.

For example, various example embodiments of the emergency notification capability may be configured to support emergency notifications in emergency situations related to natural disasters or evacuations. An example of such a scenario would be where a family member is in an area affected by a natural disaster (e.g., earthquake, flood, wildfire, or the like) and calls 911 for help. There is a need for emergency notifications in this situation because, during a natural disaster, coordinating family safety is paramount. If a family member makes an emergency call, the rest of the group needs to be notified to take protective measures or arrange reunification. In this situation, notifications can be sent to family members via SMS or email, geofencing alerts can be sent to those nearby to help them to coordinate their efforts in real-time, IPTV or smart lighting notifications can be integrated into homes to signal the need for emergency evacuation, or the like.

It will be appreciated that various example embodiments of the emergency notification capability may be configured to support emergency notifications in various other types of emergency situations.

Various example embodiments of the emergency notification capability may be configured to provide various advantages or potential advantages.

For example, various example embodiments of the emergency notification capability may be configured to provide an emergency notification system that is both device-agnostic (e.g., capable of supporting delivery of emergency notifications to various types of devices on various notification delivery platforms) and network-agnostic (e.g., functioning equally well on both fixed-line and wireless phone systems). It ensures that critical information is delivered efficiently to group members regardless of the device from which the emergency call is made and/or the devices to which the associated emergency notifications are to be delivered. The emergency notification capability can also incorporate real-time updates and location tracking if the calling device supports such features.

For example, various example embodiments of the emergency notification capability may be configured to provide improved emergency notifications in a world in which we have an increasingly complex set of capabilities, platforms, and methods for "notification" of events combined with a multitude of locations and end-user devices that need to be reconciled. Various example embodiments of the emergency notification capability may be configured to overcome various limitations inherent in the current IMS-based systems, particularly regarding the timely, efficient, and thorough notification of users during emergency situations, even in the case of the increasingly complex set of capabilities, platforms, and methods for "notification" of events combined with a multitude of locations and end-user devices that need to be reconciled.

For example, various example embodiments of the emergency notification capability may be configured to provide improved profile management for user profiles and user group profiles. In existing IMS configurations, the management of user profiles is typically not user-friendly, especially under emergency conditions where swift changes might be necessary. Various example embodiments of the emergency notification capability may be configured to provide improved profile management for user profiles and user group profiles, based on integration of various enhanced protocols (e.g., XCAP, DIAMETER, or the like), thereby simplifying the management of user profiles and user group profiles and, therefore, allowing real-time updates and modifications to be made more quickly and more efficiently (e.g., with fewer user interactions).

For example, various example embodiments of the emergency notification capability may be configured to provide improved real-time group notification management. Current notification technologies typically do not effectively manage dynamic group notification, particularly in adjusting the notification recipients in real-time based on geographical and contextual relevance during emergencies. Various example embodiments of the emergency notification capability may be configured to utilize geofencing and real-time location tracking to dynamically update the list of notification recipients based on their current proximity to the emergency event, thereby enabling quicker and more appropriate responses.

For example, various example embodiments of the emergency notification capability may be configured to reduce latency in emergency communications. The existing IMS frameworks typically encounter delays during the initiation and processing of communication sessions due to complex signaling pathways and network congestion, particularly under emergency conditions where rapid response is crucial. Various example embodiments of the emergency notification capability may be configured to improve communication protocol efficiency by enhancing the SIP signaling methods to prioritize emergency calls and corresponding emergency notifications, thereby tending to reduce the latency typically experienced during critical times.

For example, various example embodiments of the emergency notification capability may be configured to provide more efficient integration with various emergency services. Conventional IMS systems typically lack robust mechanisms for integration with public emergency services, which impedes the direct relay of critical information from the emergency caller. Various example embodiments of the emergency notification capability may be configured to integrate advanced routing and notification algorithms within the IMS system in order to automatically link emergency calls with communication devices of a predefined user group, thereby ensuring that notifications are not only sent to group members of the predefined user group, but also synchronized with emergency service responses.

For example, various example embodiments of the emergency notification capability may be configured to support emergency notifications while supporting privacy and security of sensitive information. Transmitting sensitive information, such as real-time location information, during emergencies over conventional IMS systems typically poses significant privacy and security risks due to potential vulnerabilities in data encryption and protection mechanisms. Various example embodiments of the emergency notification capability may be configured to incorporate advanced encryption protocols and secure data handling practices within the IMS framework to safeguard sensitive information against unauthorized access and ensure compliance with stringent privacy regulations.

For example, various example embodiments of the emergency notification capability may be configured to provide improved device interoperability for supporting emergency notification to a significantly broader range of devices. The varying degrees of support for different types of devices and technologies in existing IMS systems can prevent effective communication during emergencies, particularly with older or less advanced devices. Various example embodiments of the emergency notification capability may be configured to provide enhanced interoperability of the IMS system with a broader range of devices, including non-smart devices and smart devices, through adaptable communication platforms, interfaces, and formats that ensure messages are received regardless of device types and device capabilities of the devices of the members of the predefined user group.

For example, various example embodiments of the emergency notification capability may be configured to a comprehensive solution that addresses various specific technical challenges, at least some of which are discussed above, by leveraging and enhancing existing IMS infrastructure. For example, as discussed above, technical improvements may include employing dynamic group management for real-time notifications, simplifying user and group profile management, optimizing signaling processes for reduced latency, integrating with emergency services for coordinated responses, integrating with customer premises devices of users, enhancing privacy and security measures, broadening device interoperability, and so forth. Through these advancements and/or other advancements, various example embodiments of the emergency notification capability may be configured to significantly improve the efficiency, reliability, and effectiveness of emergency notifications within the IMS framework, thereby enhancing the overall safety and responsiveness in critical situations.

It will be appreciated that various example embodiments of the emergency notification capability may be configured to provide various other advantages or potential advantages.

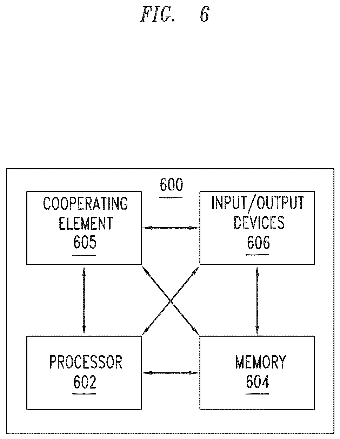

FIG. 6 depicts an example embodiment of a computer suitable for use in performing various functions presented herein.

The computer 600 includes a processor 602 (e.g., a central processing unit (CPU), a graphics processing unit (GPU), a network processing unit (NPU), a processor, a processor core of a processor, a subset of processor cores of a processor, a set of processor cores of a processor, or the like) and a memory 604 (e.g., a random access memory (RAM), a read-only memory (ROM), or the like). **In** at least some example embodiments, the computer 600 may include at least one processor (e.g., processor 602) and at least one memory (e.g., memory 604) storing instructions that, when executed by the at least one processor, cause the computer 600 to perform various functions presented herein.

The computer 600 also may include a cooperating element 605. The cooperating element 605 may include a hardware device(s). The cooperating element 605 may include firmware. The cooperating element 605 may include a process that can be loaded into the memory 604 and executed by the processor 602 to implement various functions presented herein (in which case, for example, the cooperating element 605 (including associated data structures) can be stored on a non-transitory computer-readable medium, such as a storage device or other suitable type of storage element (e.g., a magnetic drive, an optical drive, or the like)).

The computer 600 also may include one or more input/output devices 606. The input/output devices 606 may include one or more of a user input device (e.g., a keyboard, a keypad, a mouse, a microphone, a camera, a wearable device, or the like), a user output device (e.g., a display, a speaker, a wearable device, or the like), one or more network communication devices or network communication elements (e.g., an input port, an output port, a receiver, a transmitter, a transceiver, an interface, or the like), one or more storage devices (e.g., a tape drive, a floppy drive, a hard disk drive, a compact disk drive, or the like), or the like, as well as various combinations thereof.

It will be appreciated that computer 600 may represent a general architecture and functionality suitable for implementing functional elements described herein, portions of functional elements described herein, combinations of functional elements described herein, or the like, as well as various combinations thereof. For example, computer 600 may provide a general architecture and functionality that is suitable for implementing one or more elements presented herein or may provide a general architecture and functionality within which one or more elements presented herein may be utilized. computer 600 may provide a general architecture and functionality that is suitable for implementing one or more of a user device, a customer premises gateway device, one or more elements of an IMS network or platform (e.g., CSCF, LRF, or the like), or the like, as well as various combinations thereof.

It will be appreciated that various functions presented herein may be implemented within hardware, a combination of hardware and software, or the like. For example, at least some of the functions presented herein may be implemented in hardware (e.g., using a general purpose computer, one or more application specific integrated circuits, and/or any other hardware equivalents). For example, at least some of the functions presented herein may be implemented in a combination of hardware and software (e.g., via implementation of software on one or more processors, for executing on a general purpose computer (e.g., via execution by one or more processors) so as to provide a special purpose computer, and the like).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored within non-transitory computer-readable media, such as within memory within a computing device operating according to the instructions, within fixed or removable media, or the like. It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other network device or computing device.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
at least one processor; and
at least one memory storing instructions which, when executed by the at least one processor, cause the apparatus at least to perform:
detecting, by an Internet Protocol (IP) Multimedia Subsystem (IMS) device, an emergency call associated with a predefined user group including a first user and a set of other users, wherein the emergency call is initiated by the first user of the predefined user group;
obtaining, by the IMS device based on the emergency call, user group information for the predefined user group, wherein the user group information includes indications of respective user devices of the other users of the predefined user group and indications of respective notification preferences of the other users of the predefined user group;
generating, by the IMS device based on at least a portion of the user group information, a set of emergency notifications for the other users of the predefined user group; and
sending, by the IMS device, the set of emergency notifications for the other users of the predefined user group.

2. The apparatus of claim 1, wherein obtaining the user group information for the predefined user group includes:
determining, based on the emergency call, an identity of the first user of the predefined user group;
determining, based on the identity of the first user of the predefined user group, an identity of the predefined user group; and
initiating, based on the identity of the predefined user group, a request for the user group information for the predefined user group.

3. The apparatus of claim 1, wherein the user group information is obtained based on at least one of an Extensible Markup Language (XML) Configuration Access Protocol (XCAP) request or a DIAMETER protocol request.

4. The apparatus of claim 1, wherein generating the set of emergency notifications for the other users of the predefined user group includes:
determining, for each of the other users of the predefined user group based on the user group information, emergency notification generation information for the respective emergency notification to be provided to the respective other user of the predefined user group; and
generating, for each of the other users of the predefined user group based on the respective emergency notification generation information for the respective other users of the predefined user group, the respective emergency notification for the respective other user of the predefined user group.

5. The apparatus of claim 4, wherein, for at least one of the other users of the predefined user group, the emergency notification generation information specifies at least one of:
a device on which the respective emergency notification is to be presented to the respective other user of the predefined user group;
a format in which the respective emergency notification is to be presented to the respective other user of the predefined user group; or
a type of emergency information to be included as part of the respective emergency notification to be presented to the respective other user of the predefined user group.

6. The apparatus of claim 1, wherein sending the set of emergency notifications for the other users of the predefined user group includes:
sending, by the IMS device toward a user device of one of the other users using SIP signaling, one of the emergency notifications.

7. The apparatus of claim 6, wherein the one of the emergency notifications is sent toward the user device of the one of the other users using SIP signaling based either on a determination, based on the user group information, that the one of the other users has a respective preference to be notified via the user device or on a determination that the first user and the one of the other users are associated with a common telecommunications service provider.

8. The apparatus of claim 1, wherein sending the set of emergency notifications for the other users of the predefined user group includes:
sending, by the IMS device toward a customer premises gateway device of the first user, at least one of the emergency notifications.

9. The apparatus of claim 8, wherein the at least one of the emergency notifications is sent toward the customer premises gateway device of the first user based on a determination, based on the user group information, that at least one of the other users has a respective preference either to be notified via a user device not associated with an IMS system supporting communications of the first user or to be notified via a messaging platform.

10. The apparatus of claim 1, wherein sending the set of emergency notifications includes at least one of:
sending, using a SIP MESSAGE method, one or more text-based emergency notifications;
sending, using a SIP NOTIFY method, one or more emergency status update notifications;
sending at least one of the emergency notifications through a social media platform based on an interface between an IMS network of the IMS device and the social media platform; or
sending at least one of the emergency notifications through a public emergency alert system based on an interface between an IMS network of the IMS device and the public emergency alert system.

11. The apparatus of claim 1, wherein the set of emergency notifications includes at least one of a text notification, an audio notification, a video notification, a multimedia notification, a haptic notification, a simple message service (SMS) message, a voice call, a voice message, an electronic mail message, a mobile application notification, or a smart device notification.

12. The apparatus of claim 1, wherein the set of emergency notifications includes at least one of a notification to be presented via a television, a notification to be presented via a wearable device, a notification to be presented via a heads-up display, a notification to be presented via an augmented reality system, a notification to be presented via a virtual reality system, a notification to be presented via a smart home device, a notification to be presented via a car infotainment system, a notification sent using at least one IMS signaling protocol, a multimedia message sent based on Rich Communication Services (RCS), or a notification generated based on a proximity of one of the other users to a location of the first user who initiated the emergency call.

13. The apparatus of claim 1, wherein the set of emergency notifications includes at least one notification including one or more of an indication of an identity of the first user, an indication of a location of the first user, or an indication of an emergency type for which the first user initiated the emergency call.

14. The apparatus of claim 1, wherein the instructions, when executed by the at least one processor, cause the apparatus to perform at least one of:
initiating, by the IMS device based on the user group information, a group call among at least some of the other users of the predefined user group;
receiving, by the IMS device from one of the other users of the predefined user group, feedback information; and
sending, by the IMS device toward at least one emergency service, at least a portion of the feedback information.

15. A method for providing emergency notification services according to an apparatus of any of claims 1-14, the method comprising:
detecting, by an Internet Protocol (IP) Multimedia Subsystem (IMS) device, an emergency call associated with a predefined user group including a first user and a set of other users, wherein the emergency call is initiated by the first user of the predefined user group;
obtaining, by the IMS device based on the emergency call, user group information for the predefined user group, wherein the user group information includes indications of devices of the respective other users of the predefined user group and indications of notification preferences of the respective other users of the predefined user group;
generating, by the IMS device based on at least a portion of the user group information, a set of emergency notifications for the other users of the predefined user group; and
sending, by the IMS device, the set of emergency notifications for the other users of the predefined user group.
